(19) Europäisches Patentamt
European Patent Office
Office européen des brevets

(11) EP 1 768 407 A1

(12) EUROPEAN PATENT APPLICATION
published in accordance with Art. 158(3) EPC

(43) Date of publication:
28.03.2007 Bulletin 2007/13

(51) Int Cl.:
H04N 7/16 (2006.01)  G06F 12/14 (2006.01)
H04N 5/765 (2006.01)

(21) Application number: 05749031.0

(22) Date of filing: 10.06.2005

(86) International application number:
PCT/JP2005/010716

(87) International publication number:
WO 2005/122577 (22.12.2005 Gazette 2005/51)

(84) Designated Contracting States:
DE FR GB

(30) Priority: 14.06.2004 JP 2004175151

(71) Applicant: MATSUSHITA ELECTRIC INDUSTRIAL CO., LTD.
Osaka 571-8501 (JP)

(72) Inventors:
• HONDA, Yoshimasa
c/o Matsushita El Ind Co, Ltd
Chuo-ku, Osaka-shi, Osaka 540-6319 (JP)

• ICHIMURA, Daijiro
c/o Matsushita El Ind Co, Ltd
Chuo-ku, Osaka-shi, Osaka 540-6319 (JP)

(74) Representative: Grünecker, Kinkeldey, Stockmair & Schwanhäusser
Anwaltssozietät
Maximilianstrasse 58
80538 München (DE)

(54) CONTENT USE METHOD AND CONTENT RECORDING DEVICE

(57) There is provided a content recording device capable of performing content reproduction with a plurality of qualities while limiting the use of the content. The device includes a content acquisition unit (101) for acquiring a basic layer indispensable for content reproduction which is obtained by hierarchically encoding at least one of the parameters of the resolution, bit rate, and frame rate and an extended layer for interpolating it; and an access control unit (112) for recording the basic layer, the extended layer, and use control information, moving the basic layer recorded in a basic layer recording unit (109) and the use control information recorded in a use control information recording unit (111) to an external content recording device (140), and deleting the moved basic layer from the basic layer recording unit (109), thereby enabling reproduction of the content with various qualities by a plurality of devices as well as reproduction with the original quality while satisfying the use limit posed on the content.

FIG.3

EP 1 768 407 A1

**Description**

Technical Field

The present invention relates to a content use method and content recording apparatus, and more particularly, to a technology for limiting usage of content and enabling multi-quality playback of content using a hierarchical coding scheme.

Background Art

Conventionally, there is a demand that content purchased by a user be played back using a cellular phone or PDA in a car or the like, and one that realizes this is disclosed, for example, in Patent Document 1. FIG. 1 shows a conventional content use method disclosed in Patent Document 1.

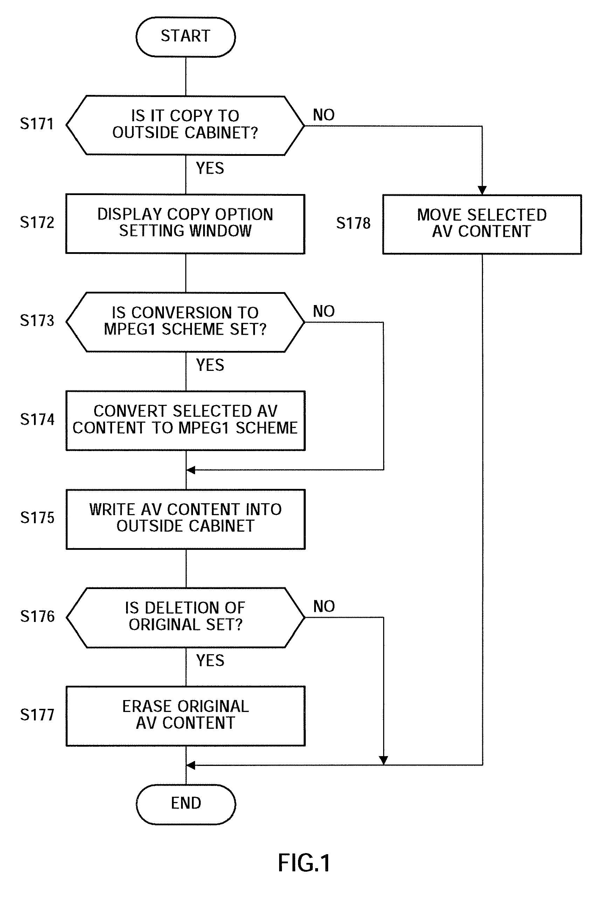

In FIG. 1, when an AV content management search program copies content to an outside cabinet (step S171), the content are converted to low resolution such as MPEG1 (step S174) and the original content are deleted simultaneously (step S177). This prevents replication of content and allows playback at low resolution using a portable terminal or the like while protecting its copyright.
[Patent Document 1] Japanese Patent Application Laid-Open No.2001-218157 (pages 10-11, FIG.15)

Disclosure of Invention

Problems to be Solved by the Invention

However, with the method of converting content to low resolution and deleting the original as disclosed in the above Patent Document 1, there is a problem in that the content cannot be played back again at original high resolution.
It is therefore an object of the present invention to provide a content use method and content recording apparatus capable of playing back content with diverse quality using a plurality of devices while keeping usage limitation imposed on the content and also capable of playing back the content with original quality again.

Section for Solving the Problem

The content recording apparatus of the present invention adopts a configuration including a recording section that records a base layer indispensable for playing back content and an enhancement layer which interpolates the base layer, obtained by applying hierarchical coding to content about at least one of parameters of resolution, bit rate and frame rate, a usage control information recording section that records usage control information that limits usage of content, an outside device connection section that accesses an outside device and carries out data tramsmission/ reception with the outside device, a device authentication section that authenticates whether or not the outside device can be operated according to the usage control information according to identification information acquired from the outside device through the outside device connection section and an access control section that sends out data of part of the content including at least the base layer and the usage control information to the outside device authenticated by the device authentication section through the outside device connection section.
The content use method of the present invention includes a step, by a content recording apparatus, of recording a base layer indispensable for playing back content and an enhancement layer which interpolates the base layer, obtained by applying hierarchical coding to content about at least one of parameters of resolution, bit rate and frame rate, ane usage control information which limits usage of the content, a step, by the content recording apparatus device, of authenticating whether or not an outside device to be connected can be operated according to the usage control information, an access control step of transferring data of part of content including the base layer and the usage control information to the authenticated outside device, a step, by the outside device, of updating to the usage control information according to a utilization rate of the data of part of the content including the received base layer and a step of returning the data of part of the content including the base layer which has been transferred to the outside device and the updated usage control information to the content recording apparatus that is the origin of the transfer.

Advantageous Effect of the Invention

According to the present invention, it is possible to play back content with different quality and even an outside device while keeping limitations on the usage by recording content according to a hierarchical coding scheme and transfering a base layer and usage control information to the outside device.

Brief Description of Drawings

FIG.1 is a flow chart showing a conventional content use method;
FIG.2 is a conceptual diagram showing a content delivery system according to Embodiment 1 of the present invention;
FIG.3 is a block diagram showing shows the configuration of a content recording apparatus and an outside content recording apparatus according to Embodiment 1;
FIG.4 is a flow chart showing processing of the content recording apparatus according to Embodiment 1;
FIG.5 is a flow chart showing content playback processing of Embodiment 1;
FIG.6A is a flow chart showing base layer output processing of Embodiment 1 and FIG.6B is a flow chart showing base layer input processing of Embodiment 1;
FIG.7 is a flow chart showing processing of the outside content recording apparatus according to Embodiment 1;
FIG.8 is a block diagram showing the configuration of a portable content playback apparatus and the outside content recording apparatus according to Embodiment 1 ;
FIG. 9A is a flow chart showing an example of portable playback processing according to Embodiment 1 and FIG. 9B is a flow chart showing another example of portable playback processing according to Embodiment 1;
FIG. 10 is a block diagram showing the configuration of a content recording apparatus and an outside content recording apparatus according to Embodiment 2 of the present invention;
FIG.11 is a flow chart showing processing of the content recording apparatus according to Embodiment 2;
FIG.12 is a flow chart showing content coding/recording processing according to Embodiment 2;
FIG.13 is a conceptual diagram showing a content delivery system according to Embodiment 3 of the present invention;
FIG.14 is a block diagram showing the configuration of a content recording apparatus and an outside content recording apparatus according to Embodiment 3;
FIG.15 is a flow chart showing processing of the content recording apparatus according to Embodiment 3;
FIG.16 is a flow chart showing content transfer processing of Embodiment 3; and
FIG.17 is a flow chart showing outside content acquisition/playback processing of Embodiment 3.

Best Mode for Carrying Out the Invention

Now, embodiments of the present invention will be described below in detail with reference to the accompanying drawings.

In addition, the following embodiments will assume that MPEG-4 CORE SCALABLE PROFILE (ISO/IEC 14496-2 SECOND EDITION: 2001-12-01) is used as a content hierarchical coding scheme.

This hierarchical coding scheme performs coding by dividing content into a base layer and one or more enhancement layers. The base layer is MPEG-4 compatible data and content can be played back by the base layer alone. The enhancement layer is interpolation data for the base layer and content can be played back only when the base layer exists and the playback quality of the base layer can be improved.

Furthermore, the enhancement layer is classified into three categories according to the type of quality to be improved. One is a resolution enhancement layer to improve resolution, the second one is an SNR enhancement layer to improve an SN ratio and the third one is a time enhancement layer to improve a frame rate. In addition, it is also possible to generate an error-resistant layer or the like to improve error resistance.

However, the hierarchical coding scheme is not limited to this and it is also possible to use MPEG-4 FGS (FINE GRANULARITY SCALABILIBY) (ISO/IEC 14496-2 AMD.2) capable of playing back an enhancement layer by being divided into free amounts of data and a WAVELET coding scheme as typified by JPEG2000. Alternatively, it is expected that SVC (SCALABLE VIDEO CODING) (ISO/IEC 14496-10 AMD. 1) which is an enhancement standard of MPEG-4 AVC (ADVANCED VIDEO CODING) which is currently being standardized will also be available in the future.

(Embodiment 1)

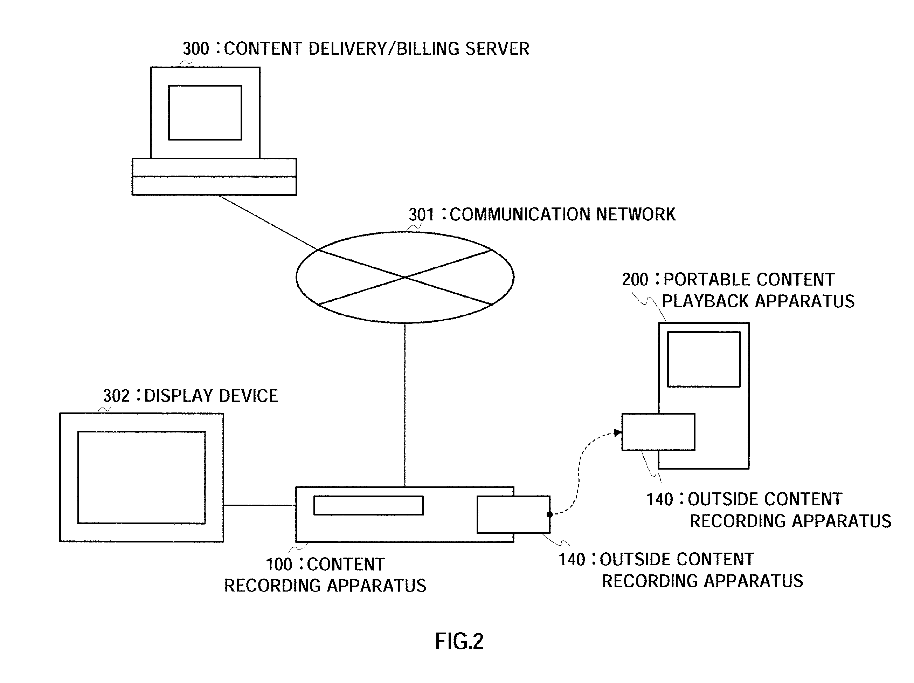

FIG.2 is a block diagram showing the configuration of a content delivery system according to Embodiment 1 of the present invention.

In FIG.2, content recording apparatus 100 records content, plays back and outputs the content to display device 302 and display device 302 receives and displays the content. Display device 302 is such as, for example, a DVD recorder with a built-in HDD. Outside content recording apparatus 140 is a content recording apparatus having excellent portability and is, for example, an IC card memory. Portable content playback apparatus 200 is connected to content recording apparatus 100 and has the function of playing back content and is such as, for example, a portable terminal and mobile telephone. Content delivery/billing server 300 delivers content and carries out billing on each delivery.

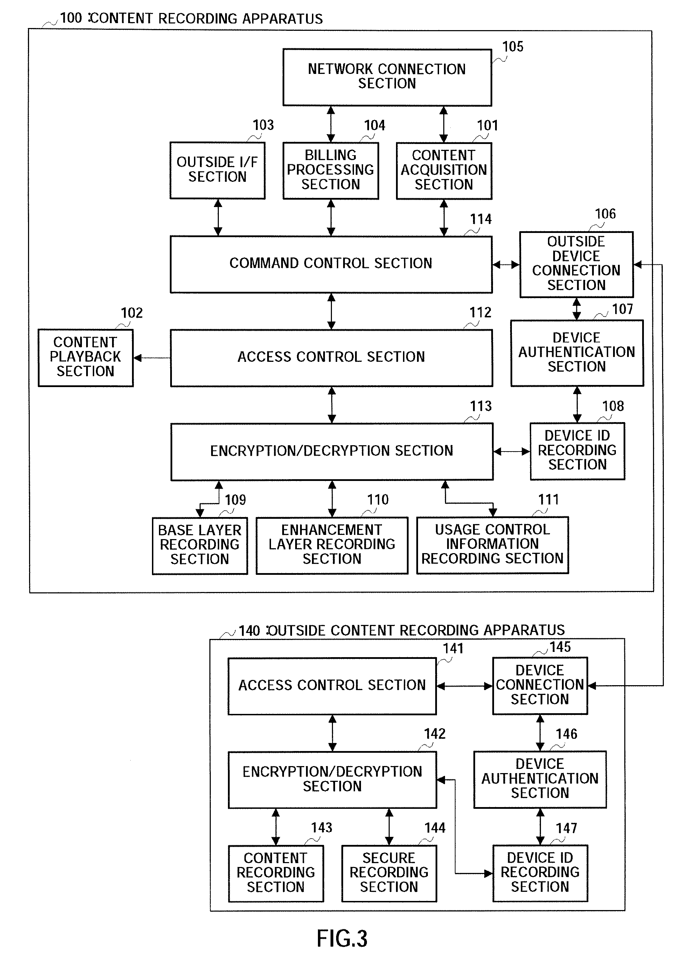

Furthermore, FIG.3 is a block diagram showing the configuration of this content recording apparatus 100 and the configuration of outside content recording apparatus 140.

Content recording apparatus 100 shown in FIG.3 is provided with content acquisition section 101, content playback section 102, outside I/F section 103, billing processing section 104, network connection section 105, outside device connection section 106, device authentication section 107, device ID recording section 108, base layer recording section 109, enhancement layer recording section 110, usage control information recording section 111, access control section 112, encryption/decryption section 113 and command control section 114.

Content acquisition section 101 is connected to network connection section 105, downloads a content package via communication network 301 and inputs the content package to command control section 114.

Content playback section 102 decodes the content input from access control section 112 and outputs content to display device 302.

Outside I/F section 103 receives a command from the user using a remote controller or the like and outputs the command to command control section 114.

Billing processing section 104 accesses content delivery/billing server 300 via communication network 301 when content is purchased or the like, and performs billing processing. This billing processing section 104 corresponds to a billing section according to the present invention.

Network connection section 105 accesses communication network 301 and carries out a communication for downloading and billing processing of the content.

Outside device connection section 106 performs connection with outside content recording apparatus 140. This outside device connection section 106 corresponds to an outside device connection section according to the present invention.

Device authentication section 107 performs authentication on outside content recording apparatus 140 using a device ID. This device authentication section 107 corresponds to a device authentication section according to the present invention.

Device ID recording section 108 performs recording or reading processing on the device ID. Base layer recording section 109 performs recording or reading processing on a base layer of the content. Enhancement layer recording section 110 performs recording or reading processing on an enhancement layer of the content. Base layer recording section 109 and enhancement layer recording section 110 correspond to a recording section according to the present invention.

Usage control information recording section 111 performs recording or reading processing on usage control information in which an access right to the content, for example, is recorded. This usage control information recording section 111 corresponds to a usage control information recording section according to the present invention.

Access control section 112 checks the access right to the content using the usage control information input from usage control information recording section 111 and performs control over such as input/output of the content on the command input from command control section 114. This access control section 112 corresponds to an access control section according to the present invention.

The encryption/decryption section 113 performs encryption/decryption processing using the device ID on the base layer and the enhancement layer and usage control information of the content. This encryption/decryption section 113 corresponds to an encryption/decryption section according to the present invention.

Command control section 114 receives, for example, a command input from outside I/F section 103, outside device connection section 106 or the like and outputs a processing command such as content input, billing, content input/output. The details of operation will be described later.

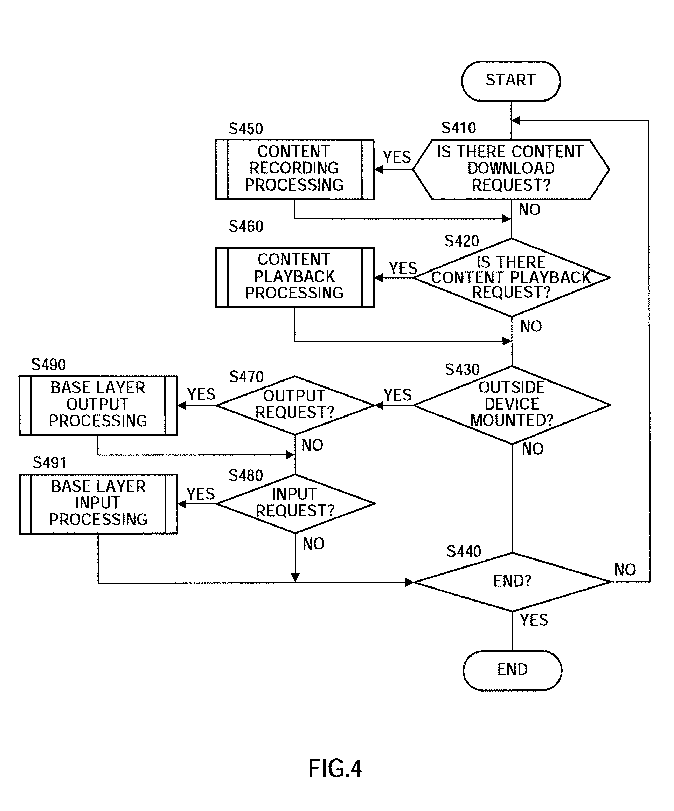

Next, the operation of content recording apparatus 100 having the above described configuration will be explained using the flow chart shown in FIG.4. The operation of the flow chart shown in FIG.4 is stored as a control program in a storage apparatus (for example, such as ROM and flash memory) (not shown) of content recording apparatus 100 and can also be controlled by a CPU (not shown).

Step S410:

First, command control section 114 judges whether or not a content download request is input. More specifically, upon receiving a command from the user using a remote controller or the like, outside I/F section 103 outputs the requested command to command control section 114. Command control section 114 transfers processing to step S450 when it has received this command or transfers processing to step S420 when it has not received the command.

Step S450:

Billing processing is performed via communication network 301, content are downloaded and then recording processing on the content is performed. More specifically, command control section 114 first sends a billing request to billing processing section 104. Billing processing section 104 accesses content delivery/billing server 300 through network connection section 105 according to the billing request input from command control section 114 and performs billing on the content to be downloaded. Billing processing section 104 then receives a download key describing an address, ID and password for downloading from content delivery/billing server 300 and outputs it to command control section 114. The billing processing involves, for example, a procedure for paying the value of the content using a credit card number or the like the user input beforehand.

Next, command control section 114 outputs the download key input from billing processing section 104 to content acquisition section 101. Content acquisition section 101 accesses content delivery/billing server 300 via network connection section 105 using the input download key, downloads a content package and then outputs the content package to command control section 114.

This content package stores two things; content hierarchically coded into a base layer and enhancement layer, and usage control information. This usage control information describes details of a right to use the content and access right. This usage control information includes, for example, count information indicating the number of times capable of playing back content, period information indicating the period during which content can be played back, transfer count information indicating the number of times content can be transferred and replicability information indicating whether or not content can be replicated. Content is played back in the form of conforming to such usage control information.

For example, when the count information is "N", content can be played back up to N times, the count information is decremented by 1 every time playback is performed and when the count information reaches 0, playback of content is disabled. Furthermore, when the period information is "M days", the date and time are recorded when the first playback is performed, the difference from the date and time of the next playback is found and playback is enabled when the difference is within M days, and playback of the content is disabled when the difference is not within M days.

Furthermore, when the transfer count information is "N", content can be transferred up to N times, the count information is decremented by 1 every time content is transferred and the transfer of content is disabled when the count information reaches 0. Alternatively, when the replicability information is "one time replicable", content can be replicated once and the value is decremented by 1 every time replication is performed and replication of content is disabled when the value reaches 0.

Next, command control section 114 outputs the content package and content recording request to access control section 112. Access control section 112 receives the content recording request, permits the content record request and outputs the input content package together with the content recording request to encryption/decryption section 113. Encryption/decryption section 113 encrypts the base layer, enhancement layer and usage control information in the content package according to the input content recording request and records them into base layer recording section 109, enhancement layer recording section 110 and usage control information recording section 111, respectively.

Here, encryption/ decryption section 113 performs encryption processing using the own device ID recorded in device ID recording section 108 as a key. Furthermore, when performing decryption processing, encryption/decryption section 113 uses the own device ID recorded in device ID recording section 108 as a key and performs decryption processing.

Step S420:

Next, command control section 114 judges whether or not a content playback request is input. More specifically, outside I/F section 103 receives the command from the user using a remote controller or the like and outputs the command requested from the user to command control section 114. Upon receiving this command, command control section 114 transfers processing to step S460 or transfers processing to step S430 otherwise.

Step S460:

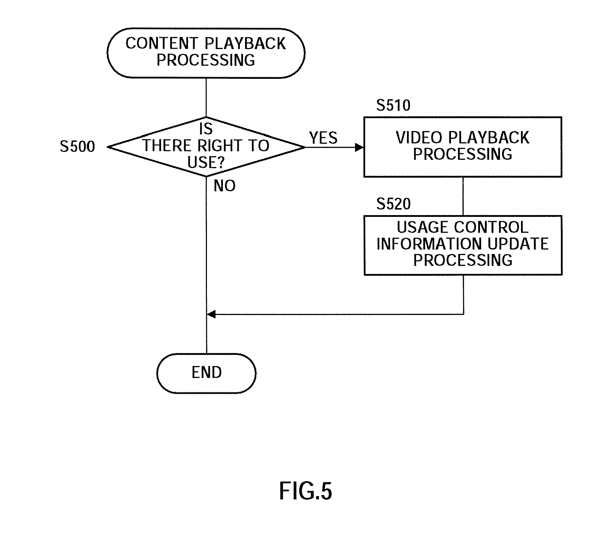

Content playback section 102 plays back content. FIG.5 is a flow chart showing the processing on playback of content.

First, access control section 112 performs right to use checking processing (step S500). More specifically, access control section 112 receives the content playback request, reads usage control information on the target content from usage control information recording section 111 via the decryption processing of encryption/decryption section 113 and checks whether or not playback is possible.

In the checking of the right to use, for example, it is checked that the count information is not 0 and that the period information indicates a valid period. Hereinafter, access control section 112 will control access to the content in the form of conforming to the usage control information in this way.

When a right to use exists, access control section 112 performs video playback processing (step S510). In a video playback processing, access control section 112 reads the base layer and the enhancement layer stored in base layer recording section 109 and enhancement layer recording section 110 respectively after the decryption processing of encryption/decryption section 113 and outputs them to content playback section 102. Content playback section 102 decrypts the content using the input base layer and enhancement layer and outputs the content to display device 302. Then, content playback section 102 outputs playback end information to access control section 112 after the playback ends.

Next, usage control information update processing is performed (step S520). Upon receiving the content playback end information, access control section 112 reads the usage control information on the content subjected to content playback from usage control information recording section 111 after the decryption processing of encryption/decryption section 113, updates the usage control information and records it into usage control information recording section 111 after the encryption processing of encryption/decryption section 113. In usage control information update according to this embodiment, the number of times content is played back is decremented by 1 from the count information.

Step S430:

Next, outside device connection section 106 checks the mounting of outside content recording apparatus 140, transfers processing to step S470 when it is mounted or transfers processing to step S440 otherwise.

Step S470:

When outside content recording apparatus 140 is connected, it is checked whether or not a request from the user for outputting a base layer to outside content recording apparatus 140 has been received through outside I/F section 103, the process moves to step S490 when there is a request or moves to step S480 otherwise.

Step S480:

When the outside device is connected, it is checked whether or not a request from the user for inputting a base layer from outside content recording apparatus 140 has been received through outside I/F section 103, the process moves to step S491 when there is a request or moves to step S440 otherwise.

Step S490:

Outside device connection section 106 performs base layer output processing on outside content recording apparatus 140.

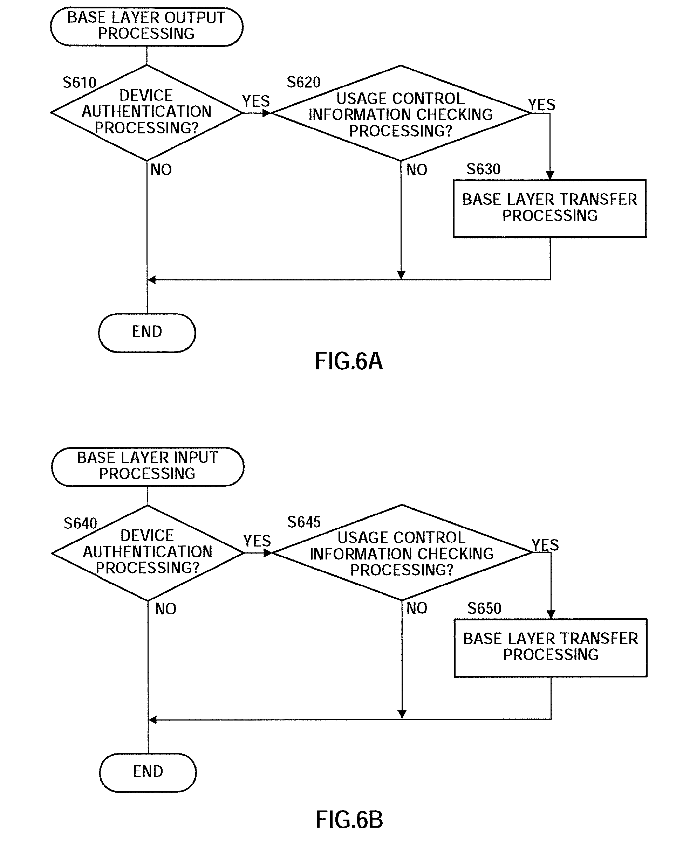

FIG.6A is a flow chart showing the base layer output processing.

First, device authentication section 107 performs device authentication (step S610). More specifically, device authentication section 107 reads the device ID of outside content recording apparatus 140 registered beforehand in device ID recording section 108 and performs authentication as to whether or not it matches the device ID of outside content recording apparatus 140 connected to outside device connection section 106. The registration of the device ID of outside content recording apparatus 140 has already been completed.

At this time, device authentication of outside content recording apparatus 140 which will be described later is also performed and when the result of the mutual authentication shows that the device has been authenticated, usage control information is then checked (step S620) and when the authentication fails, the base layer output processing ends.

In step S620, access control section 112 reads the usage control information on the content which is the target for the transfer request from usage control information recording section 111 after the decryption processing of encryption/decryption section 113 and checks whether or not the transfer is possible using transfer count information. As a result of the checking, when the transfer is possible, the process moves to base layer transfer processing (step S630) or the process ends otherwise.

In this base layer transfer processing (step S630), the base layer in content recording apparatus 100 are transferred to outside content recording apparatus 140 and the transferred data is deleted from inside content recording apparatus 100. More specifically, outside device connection section 106 outputs a base layer transfer request to access control section 112 via command control section 114.

First, access control section 112 receives the base layer transfer request and updates the transfer count information on the usage control information stored in usage control information recording section 111. That is, access control section 112 acquires the usage control information after the decryption processing of encryption/decryption section 113, decrements the value of transfer count information by 1 and updates the usage control information using the changed usage control information after the encryption processing of encryption/decryption section 113.

Then, access control section 112 reads the base layer stored in base layer recording section 109 and the usage control information stored in usage control information recording section 111 after the decryption processing of encryption/decryption section 113 and outputs them to outside device connection section 106 via command control section 114.

Outside device connection section 106 outputs the input base layer and usage control information to outside content recording apparatus 140.

Furthermore, outside device connection section 106 outputs input transfer end information to command control section 114. Upon receiving the transfer end information, command control section 114 outputs a base layer deletion request to access control section 112. Access control section 112 then deletes the base layer stored in base layer recording section 109.

Step S491:

Outside device connection section 106 performs input processing on the base layer from outside content recording apparatus 140.

FIG. 6B is a flow chart showing base layer input processing.

First, device authentication section 107 performs device authentication (step S640). More specifically, device authentication section 107 reads the device ID of outside content recording apparatus 140 registered beforehand in device ID recording section 108 and performs authentication as to whether or not it matches the device ID of outside content recording apparatus 140 connected to outside device connection section 106. The registration of the device ID of outside content recording apparatus 140 has already been completed.

At this time, outside content recording apparatus 140 which will be described later also performs similar device authentication and when the result of the mutual authentication shows that the apparatus has been authenticated, the usage control information is then checked (step S645) and when the authentication fails, the base layer input processing ends.

In step S645, access control section 112 reads the usage control information of the content which is the target for the transfer request from usage control information storage section 111 after the decryption processing of encryption/decryption section 113 and checks whether or not the transfer is possible using transfer count information. When the checking result shows that the transfer is possible, the process moves to the base layer transfer process (step S650) or the process ends otherwise.

In this base layer transfer processing (step S650), access control section 112 first requests a transfer of the base layer to outside content recording apparatus 140. When the request is received at outside content recording apparatus 140, outside device connection section 106 receives the base layer and usage control information from outside content recording apparatus 140 and outputs the input base layer and usage control information to access control section 112 via command control section 114.

Next, after encryption processing is applied at encryption/decryption section 113, access control section 112 records the base layer into base layer recording section 109 and records the usage control information into usage control information recording section 111 and outputs transfer end information to outside content recording apparatus 140 via command control section 114 and outside device connection section 106.

Step S440:

As described above, content recording apparatus 100 repeats processing from step S410 to step S491 and ends processing when the user turns off the power using a remote controller or the like.

Next, outside content recording apparatus 140 shown in FIG.2 will be described below.

Outside content recording apparatus 140 is provided with access control section 141, encryption/decryption section 142, content recording section 143, secure recording section 144, device connection section 145, device authentication section 146 and device ID recording section 147.

Access control section 141 performs access controls such as recording and reading the content into/from content recording section 143. Encryption/decryption section 142 performs encryption/decryption processing on content using the own device ID. Content recording section 143 performs processing of recording or reading the content. Secure recording section 144 has a recording area provided with a protection function against illicit data extraction and performs processing of recording or reading the data into/from the recording area. Device connection section 145 establishes connection with a device such as content recording apparatus 100 and portable content playback apparatus 200. Device authentication section 146 performs mutual authentication with the device connected to device connection section 145. Device ID recording section 147 performs processing of recording or reading the own device ID.

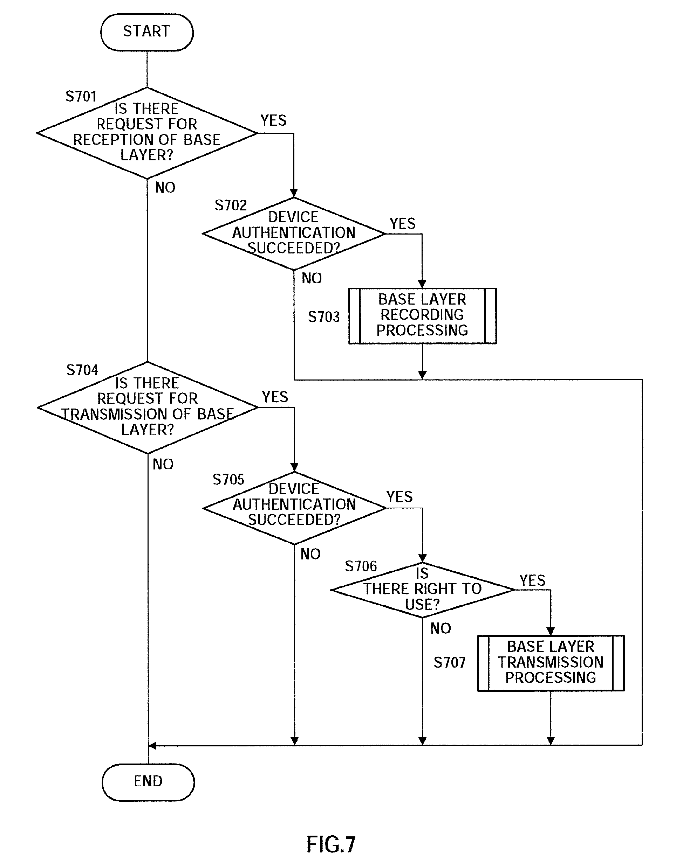

The operation of outside content recording apparatus 140 configured as shown above will be explained using FIG.7. This operation is stored as a control program in a storage apparatus (not shown) (for example, ROM and flash memory) of outside content recording apparatus 140 and can also be controlled by a CPU (not shown).

First, device connection section 145 checks a request from content recording apparatus 100 (step S701) and when the reception of the base layer is requested, device authentication section 146 performs the device authentication that requested the reception (step S702). More specifically, device authentication section 146 reads the device ID of content recording apparatus 100 which has been registered in device ID recording section 147 beforehand and performs authentication as to whether or not it matches the device ID of content recording apparatus 100 connected to device connection section 145. When the device ID is authenticated, device connection section 145 receives the base layer and usage control information from content recording apparatus 100 and outputs the received base layer and usage control information to access control section 141. On the other hand, when the authentication fails, this base layer input processing ends.

Next, after encryption processing at encryption/decryption section 142, access control section 141 records the base layer into content recording section 143 and records the usage control information into secure recording section 144 (step S703). Then, access control section 141 reports an end of transfer to content recording apparatus 100 via device connection section 145. The encryption processing at encryption/decryption section 142 is encryption processing using the own device ID stored in device ID recording section 147 as a key.

On the other hand, when transmission of the base layer is requested (step S704), device authentication section 146 performs authentication of the device that requested the transmission (step S705). When the authentication succeeds, access control section 141 reads the usage control information of the content which is the target of the content transfer request from secure recording section 144 after decryption processing of the encryption/decryption section 142. Next, the value of transfer count information is decremented by 1 and after encryption processing of encryption/decryption section 142, the usage control information in secure recording section 144 is updated using the changed usage control information (step S706). At this time, the value of the transfer count information becomes 0 and when there is no right to use, the processing ends.

Next, after decryption processing of encryption/decryption section 142, access control section 141 reads the base layer stored in content recording section 143 and the usage control information stored in secure recording section 144 and outputs them to content recording apparatus 100 via device connection section 145 (step S707).

Next, portable content playback apparatus 200 that connects outside content recording apparatus 140 and plays back content will be explained below.

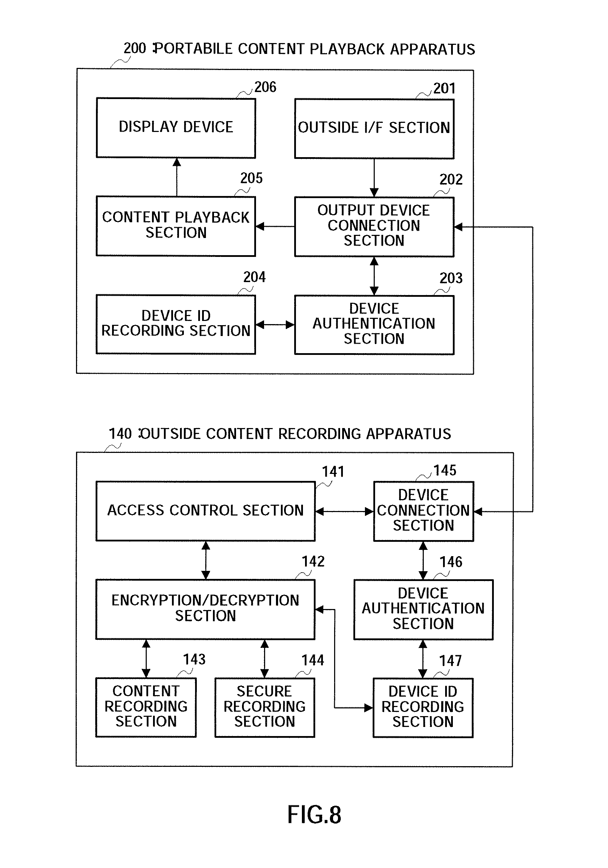

FIG.8 is a block diagram showing the configuration of this portable content playback apparatus 200. In FIG. 8, portable content playback apparatus 200 is provided with outside I/F section 201, outside device connection section 202, device authentication section 203, device ID recording section 204, content playback section 205 and display device 206.

Outside I/F section 201 receives a request from the user using a button or the like. Outside device connection section 202 accesses outside content recording apparatus 140 and performs reading processing on content from outside content recording apparatus 140. Device authentication section 203 performs authentication of outside content recording apparatus 140 using a device ID. Device ID recording section 204 performs processing of recording or reading the own device ID and the device ID of the outside content recording apparatus. Content playback section 205 decodes content and plays back the content using display device 206. This portable content playback apparatus 200 does not have any storage section that records the base layer and has only a minimum buffer memory necessary for playback.

The operation of portable content playback apparatus 200 configured as described above will be explained.

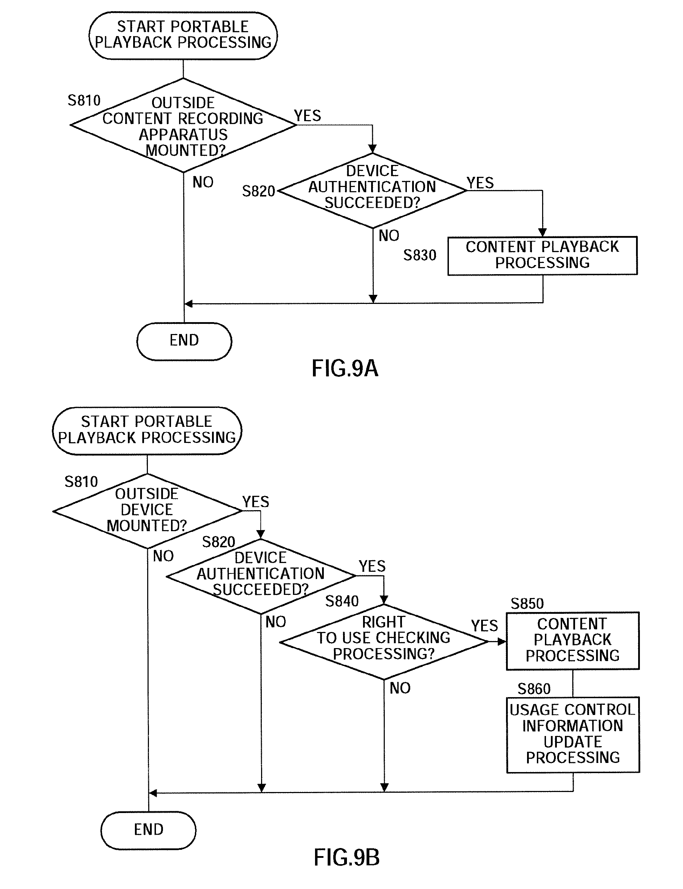

Portable content playback apparatus 200 inserts outside content recording apparatus 140 and plays back the base layer which has been transferred from content recording apparatus 100 and stored in outside content recording apparatus 140. FIG.9A is a flow chart showing an example of the operation of portable content playback apparatus 200.

Portable content playback apparatus 200 plays back content when a content playback request is input from the user using a button or the like at outside I/F section 201.

Step S810:

Portable content playback apparatus 200 checks the insertion of the outside device. More specifically, outside device connection section 202 of portable content playback apparatus 200 checks whether or not the outside device is connected with outside content recording apparatus 140.

Step S820:

Moreover, device authentication section 203 reads the device ID of outside content recording apparatus 140 registered beforehand in device ID recording section 204 and performs authentication as to whether or not it matches the device ID of outside content recording apparatus 140 connected to outside device connection section 202. Suppose that the registration of the device ID of outside content recording apparatus 140 has already been completed. At this time, outside content recording apparatus 140 also performs similar device authentication and performs mutual authentication. When the result of the authentication shows that the device ID has been authenticated, the process moves to playback processing (step S830) or the process ends otherwise.

Step S830:

Next, content playback section 205 performs content playback processing. Outside device connection section 202 outputs a content playback request to outside content recording apparatus 140 via device connection section 145. After that, outside device connection section 202 receives base layers one by one from outside content recording apparatus 140 according to the rate of a stream played back at content playback section 205 and outputs the input base layer to content playback section 205. Content playback section 205 decodes content one by one using the input base layers and displays the content on display device 206. The data of a buffer memory (not shown) is erased after the playback.

Furthermore, usage of the content can also be limited according to such as the playback count of the content. An example in this case is shown in FIG. 9B. Step S810 and step 820 are the same as those in FIG.9A.

Step S840:

Usage control information of the content is checked. Access control section 141 acquires usage control information of secure recording section 144 after decryption processing of encryption/decryption section 142 and judges whether or not playback is possible using the usage control information. More specifically, when it is checked that the playback count information of the usage control information is not 0 and that the use period information is valid, access control section 141 judges that playback is possible. When playback is possible, the process moves to S850 or the process ends otherwise.

Step S850:

Content playback section 205 plays back the content and outputs, after the playback ends, playback end information including a playback history to device connection section 145 via outside device connection section 202. Suppose the playback history at least includes a playback count and playback section. Device connection section 145 of outside content recording apparatus 140 outputs the playback end information to access control section 141.

Step S860:

Access control section 141 receives this and performs update processing on the usage control information. That is, when access control section 141 receives the content playback end information, it reads the usage control information of the content which played back content from secure recording section 144 after decryption processing of encryption/decryption section 142, changes the usage control information and updates the usage control information to secure recording section 144 after encryption processing of encryption/decryption section 142. In usage control information update, suppose that the playback count in the playback history is subtracted from the count information. Furthermore, when playback of content is stopped midway, suppose that such as segment information indicating a segment of the content which can be played back is added to the usage control information using the playback segment in the playback history, for example. In this case, by making such a setting that the segment of the content which has been played back cannot be played back, the usage control information can be updated appropriately when playback of content is stopped midway.

The operations of the content recording apparatus, outside content recording apparatus and portable content playback apparatus of this embodiment have been described so far.

Next, the operation of the content delivery/billing system constructed of the apparatuses that operate in this way will be described below using FIG.2.

First, content recording apparatus 100 accesses content delivery/billing server 300 via communication network 301, downloads and records content hierarchically coded after the billing processing and the usage control information including an access right to the content. The content consist of a base layer and enhancement layer hierarchically coded and these layers are recorded in base layer recording section 109 and enhancement layer recording section 110 respectively.

Next, when there is a request for playback of the content from the user, content recording apparatus 100 decodes the content using the base layer and enhancement layer and plays back such as an original high resolution image of the content.

Next, when the user requests downloading of the content to outside content recording apparatus 140, content recording apparatus 100 performs device authentication of outside content recording apparatus 140 connected thereto, and when the authentication succeeds, content recording apparatus 100 transfers the base layer and the usage control information of the content to this outside content recording apparatus 140. At this time, content recording apparatus 100 deletes the base layer and usage control information from the own storage section. This prevents the downloaded content frombeing played back by content recording apparatus 100.

Next, this outside content recording apparatus 140 is removed by the user from content recording apparatus 100 and connected to portable content playback apparatus 200.

Next, when the user requests portable content playback apparatus 200 to play back the content which is recorded in outside content recording apparatus 140, portable content playback apparatus 200 performs device authentication of outside content recording apparatus 140 and when the authentication succeeds, it then checks the usage control information recorded. When there is a right to use in outside content recording apparatus 140, portable content playback apparatus 200 plays back the base layer. At this time, the number of times the usage control information is used in outside content recording apparatus 140 is subtracted and updated.

Next, when outside content recording apparatus 140 is removed by the user from portable content playback apparatus 200 and connected to original content recording apparatus 100 again, content recording apparatus 100 performs device authentication. When the authentication succeeds, content recording apparatus 100 then checks the recorded usage control information. Then, when it has a right to use outside content recording apparatus 140, content recording apparatus 100 reads the base layer and usage control information and records them into base layer recording section 109 and usage control information recording section 111. At this time, the base layer and the usage control information in outside content recording apparatus 140 are deleted.

Next, when the user requests playback of content, content recording apparatus 100 plays back the content using this base layer and the enhancement layer recorded before. Since this playback uses the enhancement layer, such as the original high resolution image of the content is played back again.

As described above, according to this embodiment, out of the content downloaded to content recording apparatus 100 from content delivery/billing server 300, the base layer and usage control information are transferred to outside content recording apparatus 140 and the content are played back using them by portable content playback apparatus 200, which allows an outside device such as portable content playback apparatus 200 to play back content with different quality.

For example, by setting the base layer to low resolution and the enhancement layer to an resolution enhancement layer for improvement of resolution at the time hierarchical coding, content recording apparatus 100 can play back content at high resolution suitable for a high resolution display using the base and enhancement layers. Furthermore, portable content playback apparatus 200 having low throughput such as a cellular phone can play back content with appropriate quality (for example, low resolution) by transferring the base layer to outside content recording apparatus 140 such as a semiconductor memory with a small record capacity even in an environment in which there are limitations on the throughput and memory capacity.

Alternatively, it is also possible to use coding at a low bit rate and a low frame rate as the base layer and use an SN enhancement layer to improve a bit rate (SN ratio) and frame rate enhancement layer to improve a frame rate as the enhancement layer. In this case, portable content playback apparatus 200 can play back content at a low bit rate and a low frame rate.

Furthermore, according to this embodiment, when a base layer is transferred to outside content recording apparatus 140, usage control information of the content is transferred together, and even when content are played back at outside content recording apparatus 140, it is thereby possible to play back content conforming to the usage control information and place limitations on usage thereof even when content are played back with different quality.

Furthermore, according to this embodiment, when a base layer is transferred to outside content recording apparatus 140, the base layer in content recording apparatus 100 is deleted and the base layer indispensable for playing back content exists in only one device, and it is thereby possible to prevent replication of content and place limitations on usage even in an environment where content is playedbackwith apluralityof qualities.

Furthermore, according to this embodiment, when transferring the base layer to outside content recording apparatus 140, access control section 112 of content recording apparatus 100 deletes the base layer and prevents content from being replicated, but it is also possible to set the base layer in base layer recording section 109 so as to be unusable until the transferred base layer is returned. This saves time and trouble of deleting the base layer and enhances the speed.

Furthermore, according to this embodiment, when transferring the base layer and usage control information to outside content recording apparatus 140, access control section 112 of content recording apparatus 100 deletes the base layer and updates transfer count information of the usage control information, but it is also possible to use information on an available period and avoid deleting the base layer.

That is, instead of not deleting the base layer, the period information of the usage control information in content recording apparatus 100 may be set so that it cannot be used for a certain period, and contrarily the period information of the usage control information to be transferred to outside content recording apparatus 140 is set so that it can be used for a certain period. In this way, even when the outside device should be lost, playback of the content using this outside content recording apparatus 140 becomes impossible after a lapse of a certain period, and the base layer of content recording apparatus 100 becomes possible. Therefore, it is possible to save time and trouble to return the base layer from the outside device while placing limitations on the usage of content.

Furthermore, according to this embodiment, access control section 112 of content recording apparatus 100 records the base layer into base layer recording section 109, but it is not limited to this, and it is also possible to record the base layer into outside content recording apparatus 100. That is, access control section 112 can also record the base layer into secure recording section 144 from which it is extremely difficult to extract data in outside content recording apparatus 140. This allows content recording apparatus 100 to play back content only when authenticated outside content recording apparatus 140 is connected thereto and therefore it is possible to provide higher-level usage limitations.

In this case, it is further possible to save time and trouble of transferring the base layer between content recording apparatus 100 and outside content recording apparatus 140.

Furthermore, this embodiment inputs the base layer from outside content recording apparatus 140 and then deletes the base layer of outside content recording apparatus 140, and therefore the base layer exists at only one device. Therefore, it is impossible to play back the content at a plurality of devices simultaneously, and it is possible to place limitations on the usage of the content.

Furthermore, it is possible to use the base layer and enhancement layer by recording the base layer input from outside content recording apparatus 140 into content recording apparatus 100 and thereby play back high quality content again. For example, when an enhancement layer is set to a high resolution enhancement layer, its combination with the base layer makes it possible to play back content with high resolution again.

Furthermore, when receiving a base layer from outside content recording apparatus 140, this embodiment receives usage control information including playback history information and updates usage control information in content recording apparatus 100. In this way, it is possible to place usage limitations also in consideration of a situation where content is used outside content recording apparatus 100.

Furthermore, when receiving the base layer from outside content recording apparatus 140, this embodiment receives usage control information including playback history information, updates period information of usage control information in content recording apparatus 100 and places limitations on a segment of content that has already been played back, but by causing billing processing section 104 to perform billing processing to play it back again, it is also possible to play back content again. This makes it possible to realize such usage limitations that stricter limitations are placed on a playback count.

Furthermore, according to this embodiment, when content is recorded, encryption/decryption sections 113 and 142 apply encryption processing using the device ID of content recording apparatus 100 as a key, and in this way playback of content becomes impossible unless there exists the device ID of this content recording apparatus 100. Therefore, it is possible to prevent such as illicit playback of the content through replication.

As for the encryption key, using the device ID of outside content recording apparatus 140 in addition to the device ID of content recording apparatus 100 allows content to be played back only in an environment provided with outside content recording apparatus 140, and it is therefore possible to further prevent illicit playback.

Moreover, when encrypting an enhancement layer, the data in the base layer can also be used in addition to the above described key. This makes the enhancement layer usable only in an environment provided with the base layer and it is therefore possible to further prevent illicit playback of content.

Furthermore, this embodiment transfers only a base layer to outside content recording apparatus 140, but it is also possible to transfer part of an enhancement layer together. For example, when outside content recording apparatus 140 is connected, it is possible to acquire function information (such as display resolution, recording capacity and throughput capacity) and transfer an enhancement layer that matches this function information simultaneously with the base layer. As an example thereof, when the function information is display resolution with medium resolution, an enhancement layer with medium resolution in addition to the base layer with low resolution may be transferred together.

In this way, it is possible to realize highly flexible content playback suitable for the capacities of outside content recording apparatus 140 and portable content playback apparatus 200.

Furthermore, according to this embodiment, content is played back with outside content recording apparatus 140 connected to portable content playback apparatus 200, but portable content playback apparatus 200 may also include an inner memory having a function equivalent to that of outside content recording apparatus 140 to allow content recording apparatus 100 to directly transfer a base layer to the inner memory of portable content playback apparatus 200.

(Embodiment 2)

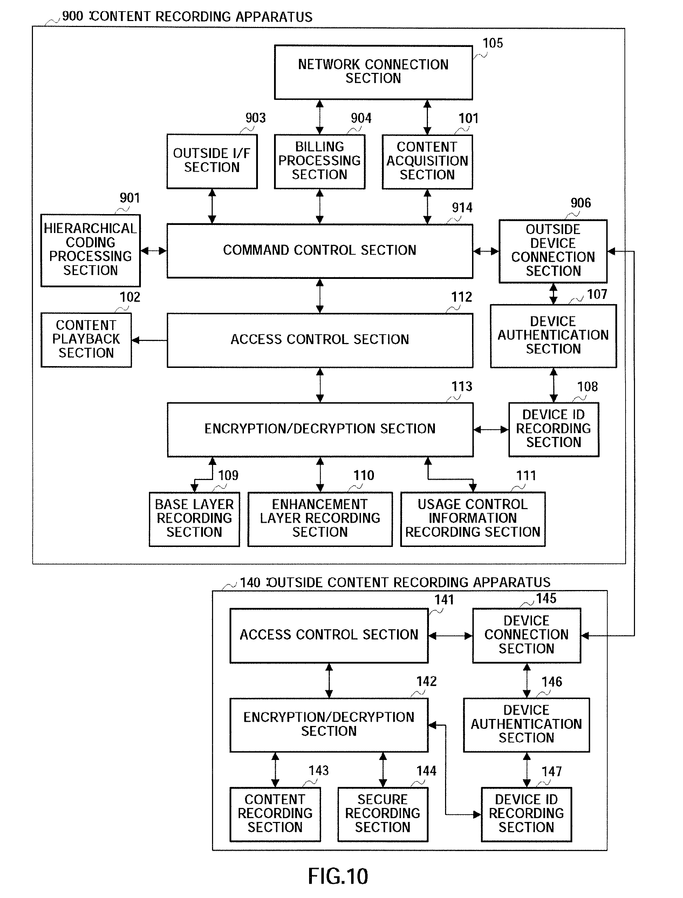

FIG.10 is a block diagram showing the configuration of content recording apparatus 900 according to Embodiment 2 of the present invention. In FIG.10, blocks carrying out the same processing as that of content recording apparatus 100 of Embodiment 1 are assigned the same reference numerals as those in FIG. 3 and explanations of the operation thereof will be omitted. Blocks of content recording apparatus 900 in FIG.10 which are different from those of Embodiment 1 are hierarchical coding processing section 901, outside I/F section 903, billing processing section 904, command control section 914 and outside device connection section 906.

Hierarchical coding processing section 901 performs hierarchical coding processing on content input from content acquisition section 101 via command control section 914 according to function information of outside content recording apparatus 140 input from outside device connection section 906 via command control section 914. This hierarchical coding processing section 901 corresponds to a hierarchical coding section according to the present invention.

Outside I/F section 903 receives a hierarchical coding request from the user using a remote controller or the like and outputs the hierarchical coding request to command control section 914.

Billing processing section 904 receives the hierarchical coding request from command control section 914, accesses content delivery/billing server 300 via network connection section 105 and performs billing processing for hierarchical coding.

Outside device connection section 906 checks a connection with outside content recording apparatus 140 in response to a request from command control section 914, acquires capacity information of outside content recording apparatus 140 (for example, such as resolution, recording capacity and throughput capacity) and outputs it to command control section 914.

Command control section 914 receives the hierarchical coding request from outside I/F section 903, acquires capacity information from outside device connection section 906 and outputs content input from content acquisition section 101 and the capacity information acquired from outside device connection section 906 to hierarchical coding processing section 901. After the hierarchical coding, the base layer and the enhancement layer of the coded content are recorded into base layer recording section 109 and enhancement layer recording section 110 respectively after encryption processing of encryption/decryption section 113.

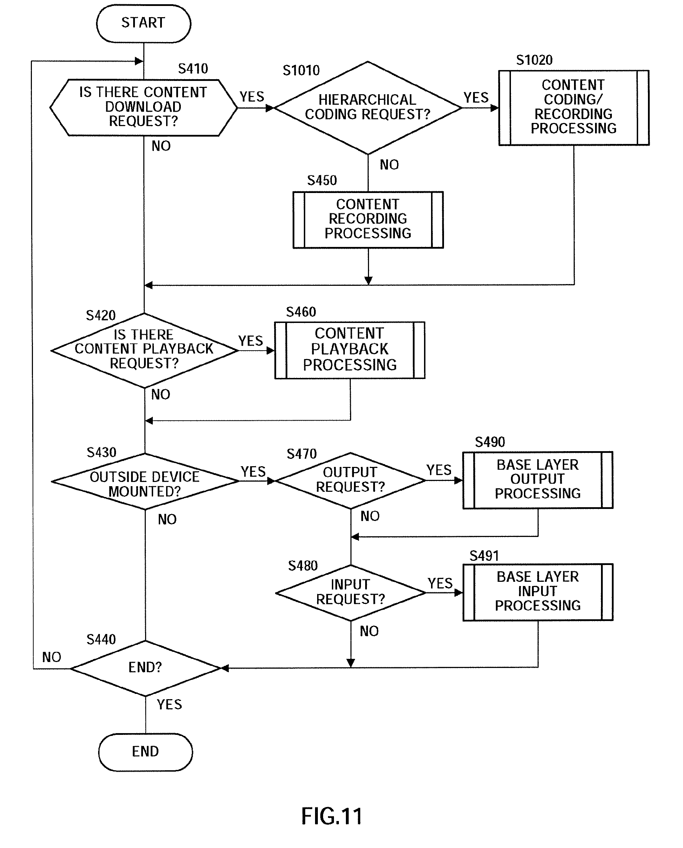

FIG.11 is a flow chart showing processing of content recording apparatus 900. In FIG.11, steps of performing the same processing as that in Embodiment 1 are assigned the same step numbers as those in FIG.4 and explanations thereof will be omitted.

Step S1010:

Command control section 914 judges whether or not the user has sent a hierarchical coding request. More specifically, when the user requests hierarchical coding of content using a remote controller or the like, outside I/F section 903 outputs this request to command control section 914 and the process moves to step S1020, or the process moves to step S450 otherwise.

Step S1020:

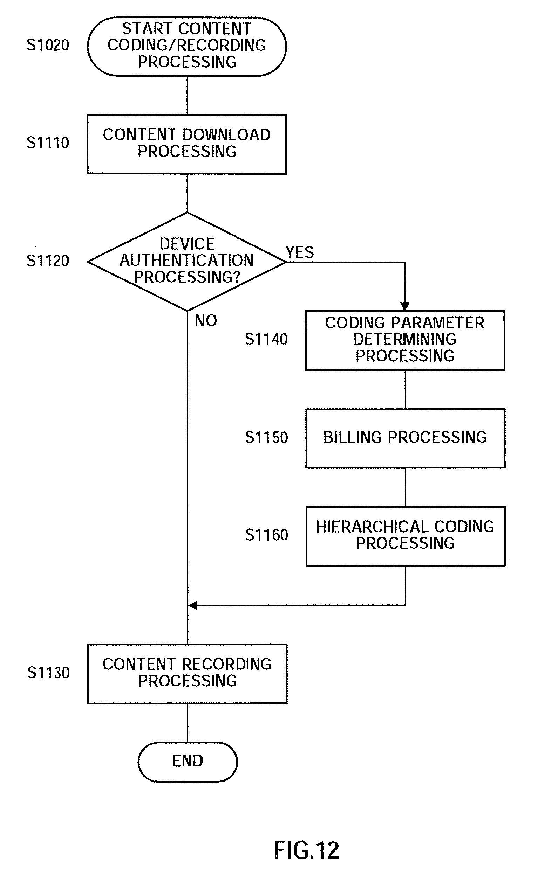

After downloading of content, hierarchical coding processing is performed. FIG.12 shows a flow chart of content coding/recording processing.

First, content downloading processing is performed (step S1110).

More specifically, command control section 914 first sends a billing request to billing processing section 904. Billing processing section 904 accesses content delivery/billing server 300 through network connection section 105 according to the input billing request, performs billing processing of the content to be downloaded, receives a download key describing the address ID and password for downloading from content delivery/billing server 300 and outputs the key to command control section 914. The billing processing involves a procedure for paying the value of content using such as a credit card number input beforehand by the user.

Next, command control section 914 outputs the download key input from billing processing section 904 to content acquisition section 101. Content acquisition section 101 accesses content delivery/billing server 300 via network connection section 105 using this download key, downloads a content package and outputs the content package to command control section 914. This content package stores two things; content hierarchically coded into the base layers and enhancement layer, and usage control information.

This is the content download processing.

Next, command control section 914 outputs a device authentication request to outside device connection section 906.

Next, outside device connection section 906 receives the device authentication request and performs device authentication (step S1120).

More specifically, outside device connection section 906 checks a connection with an outside device, and after checking of the connection, device authentication section 107 reads the device ID of outside content recording apparatus 140 registered beforehand in device ID recording section 108 and performs authentication as to whether or not it matches the device ID of outside content recording apparatus 140 connected to outside device connection section 906. The registration of the device ID of outside content recording apparatus 140 has already been completed.

When the connection with outside content recording apparatus 140 is not checked or the authentication fails, the process moves to content recording processing (step S1130).

In other cases, outside device connection section 906 acquires capacity information (such as display resolution, recording capacity and throughput capacity) from outside content recording apparatus 140 and outputs it to command control section 914. The capacity information is recorded beforehand in secure recording section 144 of outside content recording apparatus 140. Here, the capacity information may be, for example, resolution of the display device of portable content playback apparatus 200, recording capacity of content recording section 143 of outside content recording apparatus 140 and throughput of portable content playback apparatus 200.

Next, hierarchical coding processing section 901 receives this capacity information from command control section 914 and determines a coding parameter (step S1140). More specifically, hierarchical coding processing section 901 determines a coding parameter of the base layer using the capacity information input and outputs the coding parameter to command control section 914. Examples of the coding parameter of the base layer include a bit rate, resolution and frame rate.

Next, billing processing is performed (step S1150). More specifically, command control section 914 outputs the coding parameter and a hierarchical coding billing request to billing processing section 904. This hierarchical coding billing request is the right to perform hierarchical coding processing on the downloaded content for content delivery/ billing server 300. Billing processing section 904 receives a hierarchical coding billing request, accesses content delivery/ billing server 300 via network connection section 105, performs billing processing according to the coding parameter, acquires a hierarchical coding right and outputs the hierarchical coding right to command control section 914.

Command control section 914 sets a hierarchical coding permission flag to "ON" in the usage control information within the content package and outputs the content package and the capacity information input from outside device connection section 906 to hierarchical coding processing section 901.

Here, the billing processing is performed according to the coding parameter and, for example, a higher price is charged for a higher bit rate of the base layer, a higher price is charged for higher resolution of the base layer and a higher price is charged for a higher frame rate of the base layer.

Billing processing for hierarchical coding is performed apart from content downloading, but the billing method is not limited to this and billing processing may also be performed together with content downloading.

Next, hierarchical coding processing is performed (step S1160). More specifically, hierarchical coding processing section 901 performs hierarchical coding processing on the content using the coding parameter determined earlier and outputs the content to command control section 914. This embodiment uses MPEG-4 CORE SCALABLE PROFILE as the hierarchical coding scheme. For the hierarchical coding scheme, it is also possible to use other schemes such as MPEG-4 SIMPLE SCALABLE PROFILE, MPEG-4 FGS (FINE GRANULARITY SCALABILITY), JPEG2000 and SVC (SCALABLE VIDEO CODING) which is an expanded standard to MPEG-4AVC (ADVANDED VIDEO CODING) which is currently being standardized.

Especially, depending on the hierarchical coding scheme, it is possible to freely select quality by using the coding parameter of the base layer as a lower limit and using the coding parameter of the enhancement layer as an upper limit during playback of content. Therefore, the smaller the coding parameter of the base layer, the higher the degree of freedom of quality during playback of content is.

Next, content recording processing is performed (step S1130). More specifically, command control section 914 outputs a content package containing hierarchically coded content and a content recording request to access control section 112.

Access control section 112 receives the content recording request, permits the content recording request and outputs the input content package together with the content recording request to encryption/decryption section113. Encryption/decryption section 113 encrypts a base layer, enhancement layer and usage control information in the content package, records them into base layer recording section 109, enhancement layer recording section 110 and usage control information recording section 111, respectively. Here, encryption/decryption section 113 performs encryption processing using the device ID of content recording apparatus 900 recorded in device ID recording section 108 as a key. Furthermore, when performing decryption processing, encryption/decryption section 113 performs encryption processing using the device ID of content recording apparatus 900 recorded in device ID recording section 108 as a key.

These are the descriptions of the operation of content recording apparatus 900 according to this embodiment.

As described above, according to this embodiment, it is possible to generate a base layer according to the performance of the outside device by performing hierarchical coding processing on content using capacity information.

Moreover, it is possible to prevent illicit tampering of content and place limitations on usage by enabling hierarchical coding processing after performing authentication and billing processing on the outside device.

Furthermore, it is possible to perform content playback suitable for the capacity of the outside device by determining the bit rate, resolution and frame rate of the base layer according to the recording capacity, resolution and throughput capacity as the capacity information, respectively.

For example, the resolution of the base layer is set as the resolution of the capacity information of portable content playback apparatus 200. This allows content to be played back with resolution best suited as the display resolution of the outside device.

Alternatively, when recording capacity is included in the capacity information, the value calculated using following (Expression 1) is used as the bit rate of the base layer.

$$\text{Bit rate (bits per second)} = \text{"recording capacity (bits)"}/\text{"total content duration (seconds)"} \cdots \text{(Expression 1)}$$

This allows the content to be played back to the end even when there are limitations on the outside content recording capacity.

Alternatively, when throughput (A) is included in the capacity information, the frame rate in following (Expression 2) is used in comparison with throughput (B) of content recording apparatus 900.

$$\text{Frame rate (frames/second)} = 30 * B/A \cdots \text{(Expression 2)}$$

This allows content to be played back in real time at a reduced frame rate even when there are limitations on the throughput of portable content playback apparatus 200. Content recording apparatus 900 can play back content at 30 (frames/second) as a precondition.

These calculation methods are only a few examples and any method can be used, for example, a combination of the above described methods.

Furthermore, this embodiment performs billing processing according to a coding parameter of the base layer, and can thereby bill the amount of money corresponding to the degree of freedom of content playback.

Furthermore, this embodiment performs such billing processing that out of the coding parameters of the base layer, the higher the resolution, the higher the bit rate or the higher the frame rate, the higher fee is charged, and can thereby realize such content delivery that the higher the degree of freedom of content playback, the higher fee is charged.

(Embodiment 3)

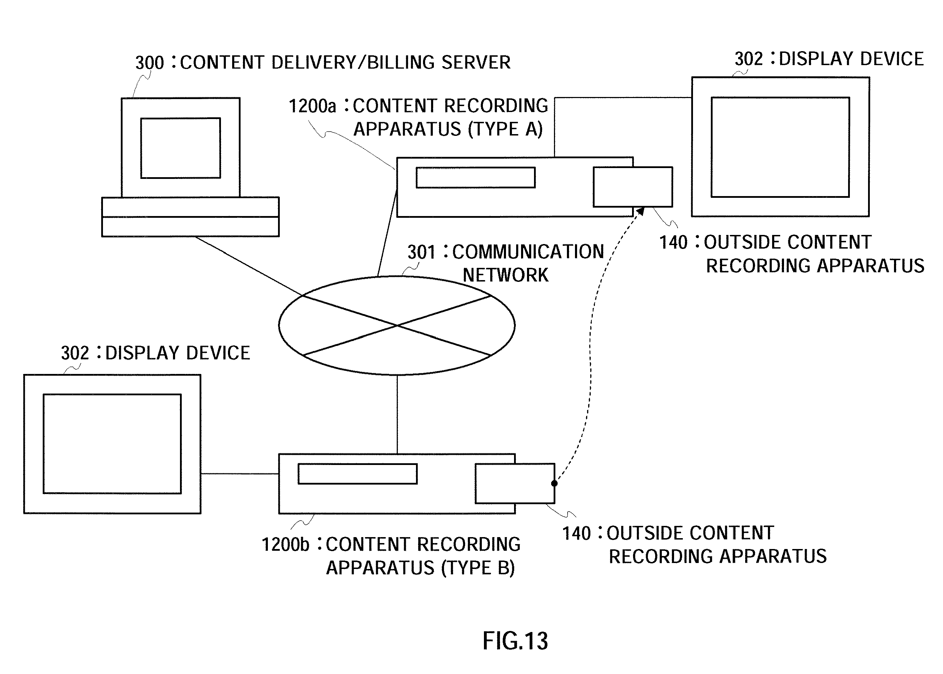

FIG.13 is a block diagram showing the configuration of a content delivery system according to Embodiment 3 of the present invention.

In FIG.13, content recording apparatus 1200a is intended to record and play back content and differs from content recording apparatus 100 shown in Embodiment 1 in that an enhancement layer can be exchanged with another content recording apparatus 1200b.

In this embodiment, after a base layer of content recording apparatus 1200b is transferred to outside content recording apparatus 140, an enhancement layer is transferred to another content recording apparatus 1200a connected via communication network 301, and it is thereby possible to allow other content recording apparatus 1200a to which outside content recording apparatus 140 is connected to also realize high quality content playback.

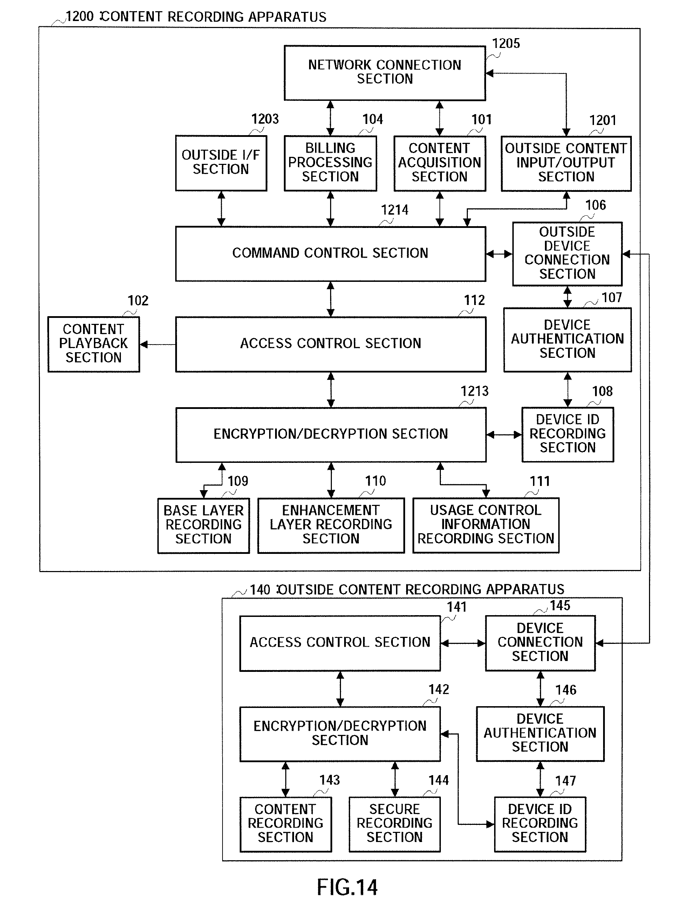

FIG.14 is a block diagram showing the configuration of content recording apparatus 1200 according to this embodiment. In FIG.14, content recording apparatus 1200 may record content (called an "apparatus type A") or may function as a remote content recording apparatus (called an "apparatus type B") to which outside content recording apparatus 140 is connected, but for simplicity of explanation, the block diagram and flow chart illustrating the operation will be described together. In the block diagram of FIG.14, blocks having the same operations as those in Embodiment 1 are assigned the same reference numerals as those in FIG.3 and explanations thereof will be omitted.

In FIG.14, the blocks which are different from those in Embodiment 1 are outside content input/output section 1201, outside I/F section 1203, network connection section 1205, command control section 1214, and encryption/decryption section 1213.

The operation of each block differs depending on the operation type of apparatus, so a case of apparatus type A (content recording apparatus 1200a) will be described below first.

The operation of outside I/F section 1203 is equivalent to that of Embodiment 1.

Network connection section 1205 receives a device ID from remote content recording apparatus 1200b (apparatus type B) and outputs the device ID to outside content input/output section 1201.

The operation of command control section 1214 is the same as the operation of Embodiment 1.

Outside content input/output section 1201 receives the device ID input of other content recording apparatus 1200b (apparatus type B) via network connection section 1205 and transfers an encrypted enhancement layer to remote content recording apparatus 1200b (apparatus type B) via network connection section 1205. Outside content input/output section 1201 corresponds to an outside content input/output section according to the present invention.

Encryption/decryption section 1213 receives an encryption request from outside content input/output section 1201 via command control section 1214 and access control section 112 and performs encryption processing on the enhancement layer using the device ID of other content recording apparatus 1200b (apparatus type B) on communication network 301 as a key. This encryption/decryption section 1213 corresponds to an encryption/decryption section or a decryption section according to the present invention.

Next, the case of apparatus type B (content recording apparatus 1200b) will be described below.

In addition to the operation of Embodiment 1, outside I/F section 1203 receives a request for acquisition of outside content from the user using a remote controller or the like and outputs it to command control section 1214.

The operation of network connection section 1205 is equivalent to that of Embodiment 1.

Command control section 1214 receives a request for acquisition of outside content from outside I/F section 1203 and outputs a content input request to outside content input/output section 1201.

Outside content input/output section 1201 receives the outside content input request from command control section 1214, outputs the device ID to content recording apparatus 1200a (apparatus type A) via network connection section 1205. Furthermore, outside content input/output section 1201 acquires an encrypted enhancement layer via network connection section 1205 and records the enhancement layer into enhancement layer recording section 110.

The operation of encryption/decryption section 1213 is equivalent to that of Embodiment 1.

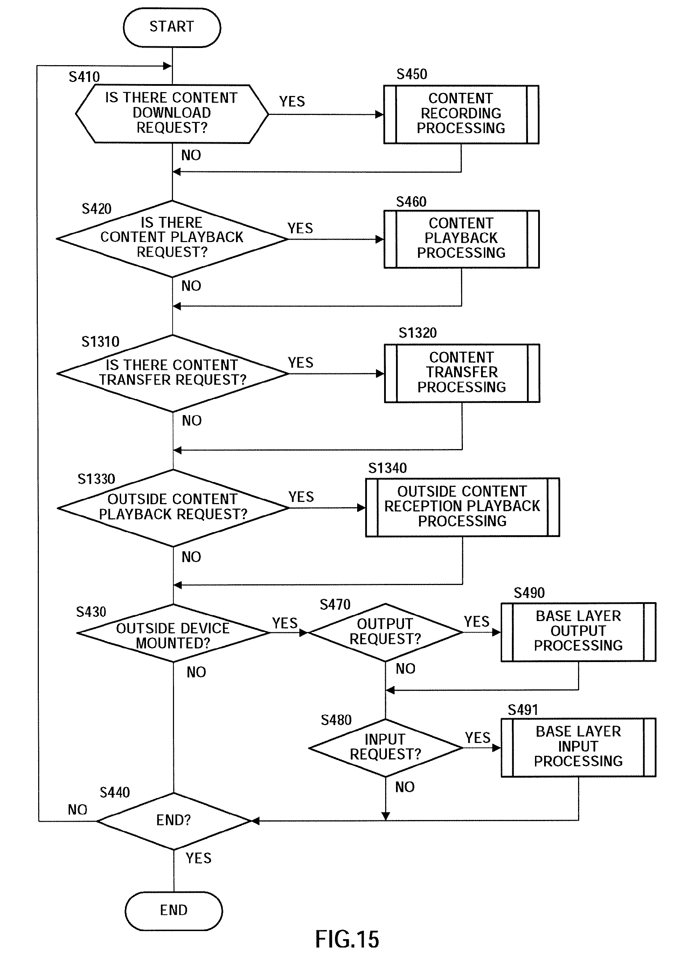

FIG.15 is a flow chart showing the operation of content recording apparatus 1200 according to this embodiment. In FIG.15, steps of performing the same processing as that in Embodiment 1 are assigned the same reference numerals as those in FIG.4 and explanations thereof will be omitted. The flow chart in FIG.15 describes processing of both apparatus types A and B.

First, the case of apparatus type A (content recording apparatus 1200a) will be described.

Step S1310:

It is judged whether or not a transfer of content is requested. More specifically, when network connection section 1205 receives the device ID from remote content recording apparatus 1200b (type B), it outputs the device ID to outside content input/output section 1201 and judges that a transfer of content has been requested and the process moves to step S1320 or moves to step S1330 otherwise. However, in the case of this apparatus type A, content has not been received from outside content recording apparatus 140, so the process moves to step S430.

Step S1320:

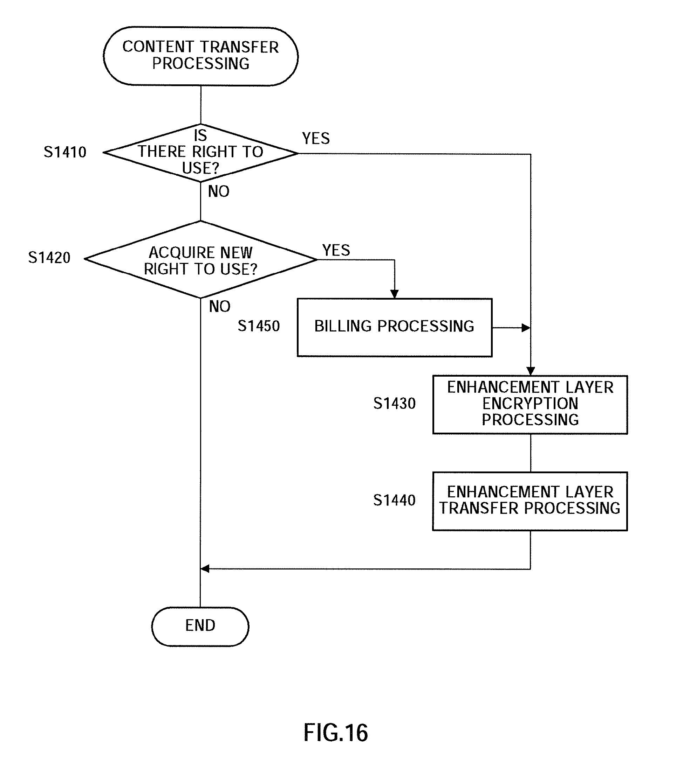

Content is transferred to remote content recording apparatus 1200b. FIG.16 is a flow chart showing content transfer processing.

First, usage control information is checked (step S1410). More specifically, when a device ID is input, outside content input/output section 1201 outputs usage control information checking request to access control section 112 via command control section 1214. Access control section 112 acquires the usage control information of the content recorded in usage control information recording section 111 after decryption processing of encryption/decryption section 1213 and checks whether or not it is possible to transfer the content. When it is possible to check the transfer of content, the process moves to step S1430 or moves to step S1420 otherwise.

In step S1420, access control section 112 judges whether or not to acquire a new right to use and when a new right to use is acquired, billing processing is performed(step S1450). In the billing processing, billing processing for a content transfer is performed. More specifically, outside content input/output section 1201 outputs a billing request to billing processing section 104 via command control section 1214.

Billing processing section 104 accesses content delivery/billing server 300 via network connection section 1205, performs the billing processing for the content transfer, and then receives a right to use content and outputs it to outside content input/output section 1201 via command control section 1214. Outside content input/output section 1201 sets a flag to enable the content transfer to "ON" using the right to use the input content and updates the usage control information (step S1450).

Next, encryption processing on an enhancement layer is performed (step S1430). More specifically, outside content input/output section 1201 outputs the device ID of content recording apparatus 1200b which is located at a remote place to encryption/decryption section 1213 via command control section 1214 and access control section 112.

Encryption/decryption section 1213 encrypts the enhancement layer recorded in enhancement layer recording section 110 using the input device ID as a key and then outputs the enhancement layer to outside content input/output section 1201.

Next, the enhancement layer is transferred (step S1440). More specifically, outside content input/output section 1201 outputs the encrypted enhancement layer to remote content recording apparatus 1200b via network connection section 1205.

Next, the case of apparatus type B (content recording apparatus 1200b) will be described.

Step S1330:

It is judged whether or not playback of outside content is requested. More specifically, when the user requests playback of content recorded in outside content recording apparatus 140 using a remote controller or the like, outside I/F section 1203 outputs an outside content acquisition request to command control section 1214. Command control section 1214 receives this outside content acquisition request and outputs the outside content acquisition request to outside content input/output section 1201. On the other hand, when there is no content playback request, the process moves to step S430.

Step S1340:

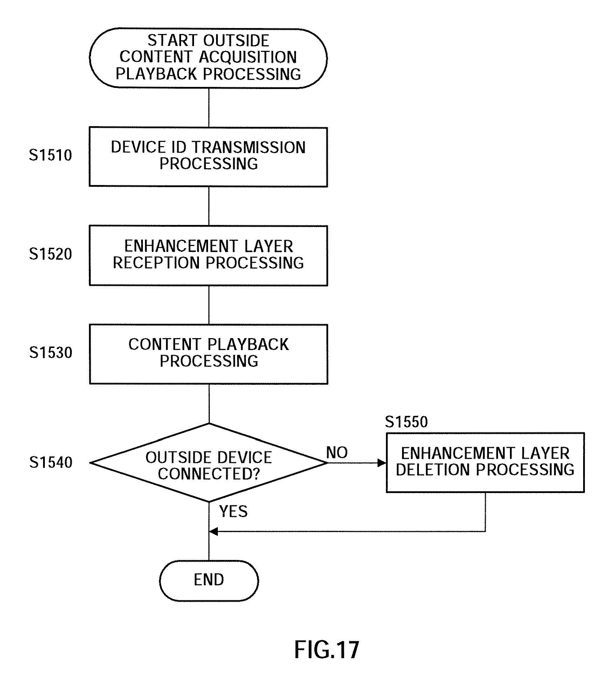

Outside content reception playback processing is performed. FIG. 17 is a flow chart showing outside content reception playback processing.

First, outside content input/output section 1201 performs device ID transmission processing (step S1510) . More specifically, outside content input/output section 1201 receives the outside content acquisition request from command control section 1214 and outputs the device ID to content recording apparatus 1200a (apparatus type A) via network connection section 1205.

Next, enhancement layer reception processing is performed (step S1520). Outside content input/output section 1201 inputs an enhancement layer via network connection section 1205 and records the input enhancement layer into enhancement layer recording section 110. Here, the enhancement layer has already been encrypted using the device ID of the content recording apparatus, so encryption is unnecessary.

Next, content playback processing is performed (step S1530). Here, content are played back using the enhancement layer in enhancement layer recording section 110 and the base layer in outside content recording apparatus 140.

More specifically, command control section 1214 outputs an outside content playback request to access control section 112. Access control section 112 acquires the base layer from outside content recording apparatus 140 as in the case of Embodiment 1 and records it into base layer recording section 109. Furthermore, access control section 112 outputs this base layer to content playback section 102. Moreover, access control section 112 acquires the enhancement layer stored in enhancement layer recording section 110 after decryption processing of encryption/decryption section 1213 and outputs it to content playback section 102. At this time, the base layer and usage control information in outside content recording apparatus 140 are deleted.

Next, content playback section 102 decodes the content using the input base layer and enhancement layer and plays back the content on display device 302.

Next, the connection of outside content recording apparatus 140 is checked (step S1540). Outside device connection section 106 checks whether or not outside content recording apparatus 140 is connected and ends the processing when outside content recording apparatus 140 is connected or deletes the enhancement layer when outside content recording apparatus 140 is not connected (step S1560). More specifically, outside device connection section 106 outputs outside device disconnection information to command control section 1214. Command control section 1214 receives this outside device disconnection information and outputs an enhancement layer deletion request to access control section 112. Access control section 112 receives the enhancement layer deletion request and deletes the enhancement layer recorded in enhancement layer recording section 110.

These are the descriptions of the operation of this embodiment.

As described above, according to this embodiment, after the enhancement layer is encrypted using the device ID of other content recording apparatus 1200a connected to a network, the enhancement layer is then transferred to other content recording apparatus 1200a. Content recording apparatus 1200a which has received the enhancement layer plays back content together with the base layer of outside content recording apparatus 140 connected thereto. In this way, when other content recording apparatus 1200a in which the enhancement layer of the content is not recorded is available, outside content recording apparatus 140 is connected thereto, and it is thereby possible to realize high quality content playback.

Moreover, by applying an encryption using the device ID of content recording apparatus 1200a, it is possible to play back content only in an environment in which both content recording apparatus 1200a and outside content recording apparatus 140 are available and thereby prevent illicit content playback.

Furthermore, this embodiment uses a device ID for encryption processing, but higher confidentiality can be kept using a key combining it with the device ID of outside content recording apparatus 140.

Furthermore, this embodiment can realize a wide range content billing method according to the transfer right by performing billing processing before a transfer of the enhancement layer.

Furthermore, when outside content recording apparatus 140 is removed, this embodiment deletes an enhancement layer and can thereby prevent the enhancement layer from being replicated illicitly and protect copyright.

Furthermore, this embodiment can also delete some enhancement layer after transferring the enhancement layers to other content recording apparatus 1200a. That is, some enhancement layer which constitutes the lowest layer is deleted from enhancement layer recording section 110, information on this deleted layer is transmitted to other content recording apparatus 1200a, and other content recording apparatus 1200a records the enhancement layer into outside content recording apparatus 140 according to the information on the deleted layer when outside content recording apparatus 140 is removed. Moreover, content recording apparatus 1200b inputs the enhancement layer when connecting outside content recording apparatus 140.

In this way, the enhancement layer indispensable for playing back content exists in only one device and it is thereby possible to prevent illicit content playback.

The content recording apparatus of the present invention adopts a configuration including a recording section that records a base layer indispensable for playing back content and an enhancement layer which interpolates the base layer, obtained by applying hierarchical coding to content about at least one of parameters of resolution, bit rate and frame rate, a usage control information recording section that records usage control information that limits usage of content, an outside device connection section that accesses an outside device and carries out data transmission/reception with the outside device, a device authentication section that authenticates whether or not the outside device can be operated according to the usage control information according to identification information acquired from the outside device through the outside device connection section and an access control section that sends out data of part of the content including at least the base layer and the usage control information to the outside device authenticated by the device authentication section through the outside device connection section.

According to this configuration, content is recorded under a hierarchical coding scheme and a base layer is transferred to an outside device conforming to usage control information, and therefore it is possible to play back content with a plurality of qualities differing in such as resolution, bit rate and frame rate.

Furthermore, according to this configuration, information for controlling the right to use content is transferred to the outside device, and therefore content is played back according to the usage control information of the content even when content is played back at the outside device, and it is thereby possible to place limitations on the usage of the content even during video playback with a plurality of qualities.

Furthermore, according to this configuration, it is possible to adapt the bit rate, resolution and frame rate or the like of the content according to the recording capacity of the device, resolution of the display device and calculation throughput of the terminal or the like based on the device capacity information.

In the content recording apparatus of the present invention in the above described configuration, the access control section deletes the base layer sent out to the outside device from the recording section.

According to this configuration, data which has been transferred to the outside device only exists in the outside device and it is not possible to play back the video at a plurality of devices simultaneously and it is thereby possible to prevent content from being replicated and place limitations on the usage of content.

Furthermore, in the content recording apparatus of the present invention in the above described configuration, when the base layer is sent out to the outside device, the access control section sets the usage control information stored in the usage control information recording section so as to be unusable.

According to this configuration, by setting data so as to be unusable, it is possible to save time and trouble of data deletion processing, increase the speed and prevent illicit usage of the content.

Furthermore, in the content recording apparatus of the present invention in the above described configuration, a usability period can be set in the usage control information and when the base layer and the usage control information which has been set to be usable for a predetermined period are sent out to the outside device, the access control section sets the usage control information to be stored in the usage control information recording section so as to be unusable only for the predetermined period.

According to this configuration, the right to use data is transferred to the outside device only for a predetermined period, and therefore even in the event of loss of the outside device, playback by the outside device becomes impossible after a lapse of a certain period, while the data in the content recording apparatus can be played back, and it is thereby possible to prevent illicit usage of the content, limit the usage and save time and trouble of returning the data from the outside device.

Furthermore, the content recording apparatus of the present invention in the above described configuration further includes a hierarchical coding section that performs hierarchical coding on content and the hierarchical coding section determines coding parameters of the base layer according to device capacity information of the outside device which has been authenticated by the device authentication section.

According to this configuration, hierarchical coding is permitted only when connected to the authenticated outside device so as to allow a device conforming to usage control information to play back content with multiple qualities and even when not coded under a hierarchical coding scheme at the time of delivery of the content, it is possible to realize playback with multiple qualities while keeping limitations on the usage.

Furthermore, according to this configuration, hierarchical coding is performed using a parameter according to device capacity information and it is thereby possible to create a base layer according to the capacity of the outside device and play back content with quality that matches the capacity of the outside device while protecting the copyright.

Furthermore, in the content recording apparatus of the present invention in the above described configuration, when the data is received from the outside device which has sent out the data, the outside device connection section outputs acquisition end information to the outside device and the access control section stores the base layer input from the outside device in the recording section and records the usage control information into the usage control information recording section.

According to this configuration, the base layer of the outside device is deleted from the outside device when the base layer is input from the outside device, which means that the base layer indispensable for playing back content exists in only one device and it is thereby impossible to play back the content at a plurality of devices simultaneously and prevent the content from being replicated.

Furthermore, according to this configuration, the base layer input from the outside device is recorded into the recording section in the content recording apparatus, and it is thereby possible to use the base layer and enhancement layer and play back content with high quality again.

Furthermore, in the content recording apparatus of the present invention in the above described configuration, the usage control information includes information on the number of times the base layer is used, and when the data is received from the outside device, the outside device connection section further acquires playback history information indicating the playback history of the base layer in the outside device and the access control section updates the usage control information according to the playback history information.

According to this configuration, usage control information in the content recording apparatus is updated using the playback history information which is playback history information during content playback at the outside device, and it is thereby possible to place usage limitations including also a content using environment outside the content recording apparatus.

Furthermore, the content recording apparatus of the present invention in the above described configuration further includes a billing section that carries out billing processing on the content with a billing server that performs billing on the content and when the usage control information indicates prohibition of use, the billing section performs the billing processing and thereby allows the content to be used again.

According to this configuration, it is possible to realize copyright protection in consideration of content playback by the outside device and thereby not only place limitations on a usage count but also allow high quality playback again through re-billing.

Furthermore, the content recording apparatus of the present invention in the above described configuration further includes a billing section that carries out billing processing on the content with a billing server that performs billing on the content and when the usage control information indicates prohibition of usage, the billing section performs the billing processing and thereby allows the content to be used again.

According to this configuration, it is possible to reuse content in possession without newly downloading content from the content delivery/billing server.

Furthermore, the content recording apparatus of the present invention in the above described configuration further includes an encryption/decryption section that encrypts/decrypts the enhancement layer and an outside content input/output section that transfers the encrypted enhancement layer to a second content recording apparatus connected via a network, and the encryption/decryption section performs encryption processing on the enhancement layer using at least one of a device ID of the second content recording apparatus and an outside device ID which is identification information of the outside device as a key.

According to this configuration, the enhancement layer is encrypted via the network and output to another content recording device and the other content recording device to which the outside device is connected can also thereby play back high quality content.

Furthermore, according to this configuration, encryption processing is applied to the enhancement layer using the remote device ID and outside device ID as a key, and it is thereby possible to play back content only in an environment in which both the remote device and the outside device are provided and realize higher-level protection of content.

Furthermore, according to this configuration, encryption is applied to the enhancement layer using at least one of the device ID of the content recording apparatus and the outside device ID as a key and it is thereby possible to allow content to be played back only in an environment in which both the device ID of the content recording apparatus and the outside device ID are provided and playback of content can be disabled even when the base layer is illicitly replicated and stricter usage limitations can be placed.

Furthermore, the content recording apparatus of the present invention in the above described configuration further includes a billing section that performs billing processing on content with a billing server that performs billing on the content, and when a transfer request is received from the second content recording apparatus, the billing section performs billing processing with the billing server to allow the use of the enhancement layer and the access control section transfers an enhancement layer to the second content recording apparatus after the billing processing.

According to this configuration, output of the enhancement layer to the remote device is not permitted unless billing processing is performed, and therefore it is possible to handle various modes of billing such as setting a content fee according to the number of playback devices.

Furthermore, the content recording apparatus of the present invention in the above described configuration further includes an outside content input/output section that carries out data transmission/reception with a second content recording apparatus connected via a network, a decryption section that decrypts encrypted data and a playback section that plays back content, and the outside content input/output section outputs the own device ID and a request for an enhancement layer to the second content recording apparatus, the outside content input/output section further receives the enhancement layer from the second content recording apparatus, records the received enhancement layer into the recording section and the playback section plays back the content which is obtained by the decryption of the base layer and the enhancement layer recorded in the recording section by the decryption section.

According to this configuration, it is possible to prevent illicit replication of content by deleting content when the outside device is removed.

Furthermore, in the content recording apparatus of the present invention in the above described configuration, upon receiving a report that the transfer of the enhancement layer from the outside content input/output section has been completed, the access control section deletes the enhancement layer in the lowest layer indispensable for playback out of within the enhancement layer from the recording section.

According to this configuration, by transferring an enhancement layer in the lowest part necessary for content playback to the remote device and deleting it from the recording section, the enhancement layer in the lowest part exists in only one device, so that it is possible to prevent a plurality of devices from playing back the content simultaneously.

Furthermore, in the content recording apparatus of the present invention in the above described configuration, the outside device connection section receives device capacity information from the outside device and sends out the base layer and the enhancement layer based on the device capacity information.

According to this configuration, it is possible to allow content to be played back with quality suitable for the capacity of the outside device by transferring a necessary enhancement layer simultaneously with the base layer according to the capacity of the outside device.

Furthermore, in the content recording apparatus of the present invention in the above described configuration, the device capacity information includes at least one of memory capacity of the outside device, resolution of a display device and calculation throughput.

According to this configuration, by transferring the enhancement layer according to a memory capacity, resolution of the display device or calculation throughput which are the performance of the outside device, it is possible to transfer the enhancement layer at a bit rate suitable for the memory capacity, enhancement layer with resolution suitable for the resolution of the display device or enhancement layer with resolution suitable for the calculation throughput, and play back the content at the outside device.

Furthermore, in the content recording apparatus of the present invention in the above described configuration, the hierarchical coding section calculates a bit rate of the base layer using a memory capacity of the outside device and duration of the content according to the device capacity information, calculates the resolution of the base layer using the resolution of the display device, calculates a frame rate of the base layer using the calculation throughput or calculates a parameter of the base layer using a combination thereof.

According to this configuration, it is possible to realize content playback best suitable for the capacity of the outside device by generating a base layer with a bit rate suited to the memory capacity of the device, resolution suited to the resolution of the display device and frame rate suited to the throughput of the device.

Furthermore, the content use method of the present invention includes a step, by a content recording apparatus, of recording a base layer indispensable for playing back content and an enhancement layer which interpolates the base layer, obtained by applying hierarchical coding to content about at least one of parameters of resolution, bit rate and frame rate, and usage control information which limits usage of the content, a step, by the content recording apparatus, of authenticating whether or not an outside device to be connected can be operated according to the usage control information, an access control step of transferring data of part of content including the base layer and the usage control information to the authenticated outside device, a step, by the outside device, of updating to the usage control information according to a utilization rate of the data of part of the content including the received base layer and a step of returning the data of part of the content including the base layer which has been transferred to the outside device and the updated usage control information to the content recording apparatus that is the origin of the transfer.

According to this method, content are recorded under the hierarchical coding scheme and the base layer is transferred to the outside device conforming to the usage control information, and therefore the outside device can play back content of quality differing in such as resolution, bit rate and frame rate.

Furthermore, according to this method, the information which controls the right to use the content is transferred to the outside device, and therefore content are played back according to the usage control information of the content even when content are played back at the outside device, and it is thereby possible to limit usage of the content even during video playback with a plurality of qualities.

The present application is based on Japanese Patent Application No. 2004-175151 filed on June 14, 2004, entire content of which is expressly incorporated by reference herein.

Industrial Applicability

The present invention is useful for a content recording apparatus and a content use method and suitable for use in playing back content subject to usage limitations using a plurality of devices differing in throughput and constraints.

**Claims**

1. A content recording apparatus comprising:

   a recording section that records a base layer indispensable for playing back content and an enhancement layer which interpolates the base layer, the base layer and the enhancement layer being obtained by applying hierarchical coding to content on at least one of parameters of resolution, bit rate and frame rate;

   a usage control information recording section that records usage control information that limits usage of content;

   an outside device connection section that accesses an outside device and carries out data transmission/reception with said outside device;

   a device authentication section that authenticates whether or not said outside device can be operated according to the usage control information according to identification information acquired from said outside device through said outside device connection section; and

   an access control section that sends out data of part of the content including at least the base layer and the usage control information to said outside device authenticated by said device authentication section through said outside device connection section.

2. The content recording apparatus according to claim 1, wherein said access control section deletes the base layer sent out to said outside device from said recording section.

3. The content recording apparatus according to claim 1, wherein a usability period can be set in the usage control information, and

   when the base layer is sent out to said outside device, said access control section sets the usage control information stored in said usage control information recording section so as to be unusable.

4. The content recording apparatus according to claim 1, wherein a usability period can be set in the usage control information, and

   when the base layer and the usage control information which has been set to be usable for a predetermined period are sent out to said outside device, said access control section sets the usage control information to be stored in said usage control information recording section so as to be unusable only for the predetermined period.

5. The content recording apparatus according to claim 1, further comprising a hierarchical coding section that performs hierarchical coding on content,

   wherein said hierarchical coding section determines coding parameters of the base layer according to device capacity information of said outside device which has been authenticated by said device authentication section.

6. The content recording apparatus according to claim 2, wherein when the data is received from said outside device which has sent out the data, said outside device connection section outputs acquisition end information to said outside device, and

   said access control section stores the base layer input from said outside device in said recording section and records the usage control information into said usage control information recording section.

7. The content recording apparatus according to claim 6, wherein the usage control information comprises information on the number of times the base layer is used, and when the data is received from said outside device, said outside device connection section further acquires playback history information indicating playback history of the base layer in said outside device, and
said access control section updates the usage control information according to the playback history information.

8. The content recording apparatus according to claim 7, further comprising a billing section that carries out billing processing on the content with a billing server that performs billing on the content,
where in when the usage control information indicates prohibition of use, said billing section performs the billing processing and thereby allows the content to be used again.

9. The content recording apparatus according to claim 5, further comprising a billing section that carries out billing processing on the content with a billing server that performs billing on the content,
wherein when the usage control information indicates prohibition of use, said billing section performs the billing processing and thereby allows the content to be used again.

10. The content recording apparatus according to claim 1, further comprising:

   an encryption/decryption section that encrypts/decrypts the enhancement layer; and
   an outside content input/output section that transfers the encrypted enhancement layer to a second content recording apparatus connected via a network,
   wherein said encryption/decryption section performs encryption processing on the enhancement layer using at least one of a device ID of said second content recording apparatus and an outside device ID which is identification information of said outside device as a key.

11. The content recording apparatus according to claim 10, further comprising a billing section that performs billing processing on content with a billing server that performs billing on the content,
wherein when a transfer request is received from said second content recording apparatus, said billing section performs billing processing with said billing server to allow the use of the enhancement layer, and
said access control section transfers the enhancement layer to said second content recording apparatus after the billing processing.

12. The content recording apparatus according to claim 1, further comprising:

   an outside content input/output section that carries out data transmission/reception with a second content recording apparatus connected via a network;
   a decryption section that decrypts encrypted data; and
   a playback section that plays back content,
   wherein said outside content input/output section outputs the own device ID and a request for the enhancement layer to said second content recording apparatus, said outside content input/output section further receives the enhancement layer from said second content recording apparatus and records the received enhancement layer into said recording section, and
   said playback section plays back the content which is obtained by the decryption of the base layer and the enhancement layer recorded in said recording section by said decryption section.

13. The content recording apparatus according to claim 10, wherein upon receiving a report that the transfer of the enhancement layer from said outside content input/output section has been completed, said access control section deletes the enhancement layer in the lowest layer indispensable for playback out of within the enhancement layer from said recording section.

14. The content recording apparatus according to claim 1, wherein said outside device connection section receives device capacity information from said outside device and sends out the base layer and the enhancement layer based on the device capacity information.

15. The content recording apparatus according to any one of claims 5 to 14, wherein said device capacity information includes at least one of memory capacity of said outside device, resolution of a display device and calculation throughput capacity.

**16.** The content recording apparatus according to claim 15, wherein said hierarchical coding section calculates a bit rate of the base layer using a memory capacity of said outside device and duration of the content according to the device capacity information, calculates the resolution of the base layer using the resolution of said display device, calculates a frame rate of the base layer using the calculation throughput capacity, or calculates a parameter of the base layer using a combination thereof.

**17.** A content use method comprising:

a step, by a content recording apparatus, of recording a base layer indispensable for playing back content and an enhancement layer which interpolates the base layer, obtained by applying hierarchical coding to content on at least one of parameters of resolution, bit rate and frame rate, and usage control information which limits usage of the content;

a step, by said content recording apparatus, of authenticating whether or not an outside device to be connected can be operated according to the usage control information;

an access control step of transferring data of part of content including the base layer and the usage control information to the authenticated outside device;

a step, by said outside device, of updating to the usage control information according to a utilization rate of the data of part of the content including the received base layer; and

a step of returning the data of part of the content including the base layer which has been transferred to said outside device and the updated usage control information to said content recording apparatus that is the origin of the transfer.

```
                        ┌─────────┐
                        │  START  │
                        └────┬────┘
                             │
          ┌──────────────────────────────────┐   NO
   S171   <     IS IT COPY TO                 >─────────────────┐
          <     OUTSIDE CABINET?              >                 │
          └──────────────────────────────────┘                 │
                             │ YES                              │
                             │                                  ▼
   S172   ┌─────────────────────────┐          S178   ┌────────────────────┐
          │  DISPLAY COPY OPTION    │                 │  MOVE SELECTED     │
          │  SETTING WINDOW         │                 │  AV CONTENT        │
          └─────────────────────────┘                 └────────────────────┘
                             │                                  │
          ┌──────────────────────────────────┐   NO             │
   S173   <     IS CONVERSION TO             >───────┐          │
          <     MPEG1 SCHEME SET?            >       │          │
          └──────────────────────────────────┘       │          │
                             │ YES                    │          │
   S174   ┌─────────────────────────┐                │          │
          │  CONVERT SELECTED AV    │                │          │
          │  CONTENT TO MPEG1 SCHEME│                │          │
          └─────────────────────────┘                │          │
                             │◄───────────────────────┘          │
   S175   ┌─────────────────────────┐                           │
          │  WRITE AV CONTENT INTO  │                           │
          │  OUTSIDE CABINET        │                           │
          └─────────────────────────┘                           │
                             │                                  │
          ┌──────────────────────────────────┐   NO             │
   S176   <     IS DELETION OF               >───────┐          │
          <     ORIGINAL SET?                >       │          │
          └──────────────────────────────────┘       │          │
                             │ YES                    │          │
   S177   ┌─────────────────────────┐                │          │
          │  ERASE ORIGINAL         │                │          │
          │  AV CONTENT             │                │          │
          └─────────────────────────┘                │          │
                             │◄───────────────────────┴──────────┘
                        ┌─────────┐
                        │   END   │
                        └─────────┘
```

FIG.1

300 : CONTENT DELIVERY/BILLING SERVER

301 : COMMUNICATION NETWORK

200 : PORTABLE CONTENT
PLAYBACK APPARATUS

302 : DISPLAY DEVICE

140 : OUTSIDE CONTENT
RECORDING APPARATUS

100 : CONTENT
RECORDING APPARATUS

140 : OUTSIDE CONTENT
RECORDING APPARATUS

FIG.2

EP 1 768 407 A1

100 CONTENT RECORDING APPARATUS

105

NETWORK CONNECTION
SECTION

103

OUTSIDE I/F
SECTION

104

BILLING
PROCESSING
SECTION

101

CONTENT
ACQUISITION
SECTION

114

COMMAND CONTROL SECTION

106

OUTSIDE
DEVICE
CONNECTION
SECTION

102

CONTENT
PLAYBACK
SECTION

112

ACCESS CONTROL SECTION

107

DEVICE
AUTHENTICATION
SECTION

113

ENCRYPTION/DECRYPTION SECTION

108

DEVICE ID
RECORDING
SECTION

109

BASE LAYER
RECORDING
SECTION

110

ENHANCEMENT
LAYER RECORDING
SECTION

111

USAGE CONTROL
INFORMATION
RECORDING SECTION

140 OUTSIDE CONTENT RECORDING APPARATUS

141

ACCESS CONTROL SECTION

145

DEVICE
CONNECTION
SECTION

142

ENCRYPTION/DECRYPTION
SECTION

146

DEVICE
AUTHENTICATION
SECTION

143

CONTENT
RECORDING
SECTION

144

SECURE
RECORDING
SECTION

147

DEVICE ID
RECORDING
SECTION

FIG.3

START

S450
CONTENT RECORDING PROCESSING ←YES— S410 IS THERE CONTENT DOWNLOAD REQUEST?

NO

S460
CONTENT PLAYBACK PROCESSING ←YES— S420 IS THERE CONTENT PLAYBACK REQUEST?

NO

S490
BASE LAYER OUTPUT PROCESSING ←YES— S470 OUTPUT REQUEST? ←YES— S430 OUTSIDE DEVICE MOUNTED?

NO

NO

S491
BASE LAYER INPUT PROCESSING ←YES— S480 INPUT REQUEST?

NO

S440
END? —NO→

YES

END

FIG.4

CONTENT PLAYBACK
PROCESSING

S500 — IS THERE RIGHT TO USE?

YES → S510 VIDEO PLAYBACK PROCESSING

NO

S520 USAGE CONTROL INFORMATION UPDATE PROCESSING

END

FIG.5

BASE LAYER OUTPUT
PROCESSING

S610 DEVICE AUTHENTICATION PROCESSING? — YES → S620 USAGE CONTROL INFORMATION CHECKING PROCESSING? — YES

NO

NO

S630

BASE LAYER TRANSFER
PROCESSING

END

FIG.6A

BASE LAYER INPUT
PROCESSING

S640 DEVICE AUTHENTICATION PROCESSING? — YES → S645 USAGE CONTROL INFORMATION CHECKING PROCESSING? — YES

NO

NO

S650

BASE LAYER TRANSFER
PROCESSING

END

FIG.6B

```
                        START

S701         IS THERE
           REQUEST FOR            YES
         RECEPTION OF BASE
              LAYER?
                NO
                                S702      DEVICE
                                      AUTHENTICATION      YES
                                        SUCCEEDED?
                                            NO
                                                        BASE LAYER
                                          S703           RECORDING
                                                         PROCESSING

S704         IS THERE
           REQUEST FOR            YES
        TRANSMISSION OF BASE
              LAYER?
                NO
                                S705      DEVICE
                                      AUTHENTICATION      YES
                                        SUCCEEDED?
                                            NO
                                                  S706        IS
                                                         THERE RIGHT TO     YES
                                                             USE?
                                                              NO
                                                                        BASE LAYER
                                                            S707         TRANSMISSION
                                                                        PROCESSING

                        END
```

## FIG.7

200 PORTABILE CONTENT PLAYBACK APPARATUS

```
                        206                              201
  ┌──────────────────┐            ┌──────────────────┐
  │  DISPLAY DEVICE  │            │ OUTSIDE I/F SECTION │
  └──────────────────┘            └──────────────────┘
          ▲                                │
                  205                              202
  ┌──────────────────┐            ┌──────────────────┐
  │ CONTENT PLAYBACK │  ◄─────────│  OUTPUT DEVICE   │  ◄──────
  │     SECTION      │            │   CONNECTION     │
  └──────────────────┘            │     SECTION      │
                                  └──────────────────┘
                  204                              203
  ┌──────────────────┐            ┌──────────────────┐
  │    DEVICE ID     │  ◄────────►│     DEVICE       │
  │ RECORDING SECTION│            │ AUTHENTICATION   │
  └──────────────────┘            │    SECTION       │
                                  └──────────────────┘
```

140 OUTSIDE CONTENT RECORDING APPARATUS

```
            141                              145
  ┌──────────────────────┐        ┌──────────────────┐
  │ ACCESS CONTROL SECTION│ ◄────► │     DEVICE       │ ◄──────
  └──────────────────────┘        │   CONNECTION     │
                                  │     SECTION      │
                                  └──────────────────┘
            142                              146
  ┌──────────────────────┐        ┌──────────────────┐
  │ ENCRYPTION/DECRYPTION │ ◄──    │     DEVICE       │
  │       SECTION         │        │ AUTHENTICATION   │
  └──────────────────────┘        │    SECTION       │
                                  └──────────────────┘
      143           144                      147
  ┌──────────┐  ┌──────────┐      ┌──────────────────┐
  │ CONTENT  │  │  SECURE  │      │    DEVICE ID     │
  │RECORDING │  │RECORDING │ ───► │ RECORDING        │
  │ SECTION  │  │ SECTION  │      │    SECTION       │
  └──────────┘  └──────────┘      └──────────────────┘
```

FIG.8

START PORTABLE
PLAYBACK PROCESSING

S810

OUTSIDE
CONTENT RECORDING
APPARATUS
MOUNTED?

YES

NO

S820

DEVICE
AUTHENTICATION
SUCCEEDED?

YES

NO

S830

CONTENT PLAYBACK
PROCESSING

END

FIG.9A

START PORTABLE
PLAYBACK PROCESSING

S810

OUTSIDE
DEVICE
MOUNTED?

YES

NO

S820

DEVICE
AUTHENTICATION
SUCCEEDED?

YES

NO

S840

RIGHT
TO USE CHECKING
PROCESSING?

YES

NO

S850

CONTENT
PLAYBACK
PROCESSING

S860

USAGE CONTROL
INFORMATION
UPDATE
PROCESSING

END

FIG.9B

900 CONTENT RECORDING APPARATUS

NETWORK CONNECTION SECTION — 105

OUTSIDE I/F SECTION — 903

BILLING PROCESSING SECTION — 904

CONTENT ACQUISITION SECTION — 101

HIERARCHICAL CODING PROCESSING SECTION — 901

COMMAND CONTROL SECTION — 914

OUTSIDE DEVICE CONNECTION SECTION — 906

CONTENT PLAYBACK SECTION — 102

ACCESS CONTROL SECTION — 112

DEVICE AUTHENTICATION SECTION — 107

ENCRYPTION/DECRYPTION SECTION — 113

DEVICE ID RECORDING SECTION — 108

BASE LAYER RECORDING SECTION — 109

ENHANCEMENT LAYER RECORDING SECTION — 110

USAGE CONTROL INFORMATION RECORDING SECTION — 111

140 OUTSIDE CONTENT RECORDING APPARATUS

ACCESS CONTROL SECTION — 141

DEVICE CONNECTION SECTION — 145

ENCRYPTION/DECRYPTION SECTION — 142

DEVICE AUTHENTICATION SECTION — 146

CONTENT RECORDING SECTION — 143

SECURE RECORDING SECTION — 144

DEVICE ID RECORDING SECTION — 147

FIG.10

START

S410
IS THERE CONTENT
DOWNLOAD
REQUEST?

YES

S1010
HIERARCHICAL
CODING REQUEST?

YES

S1020
CONTENT
CODING/
RECORDING
PROCESSING

NO

NO

S450
CONTENT
RECORDING
PROCESSING

S420
IS THERE
CONTENT PLAYBACK
REQUEST?

YES

S460
CONTENT
PLAYBACK
PROCESSING

NO

S430
OUTSIDE DEVICE
MOUNTED?

YES

S470
OUTPUT
REQUEST?

YES

S490
BASE LAYER
OUTPUT
PROCESSING

NO

NO

S480
INPUT
REQUEST?

YES

S491
BASE LAYER
INPUT
PROCESSING

NO

S440
END?

NO

YES

END

FIG.11

S1020 — START CONTENT CODING/RECORDING PROCESSING

S1110 — CONTENT DOWNLOAD PROCESSING

S1120 — DEVICE AUTHENTICATION PROCESSING?

YES

NO

S1140 — CODING PARAMETER DETERMINING PROCESSING

S1150 — BILLING PROCESSING

S1160 — HIERARCHICAL CODING PROCESSING

S1130 — CONTENT RECORDING PROCESSING

END

FIG.12

300 : CONTENT DELIVERY/BILLING SERVER

302 : DISPLAY DEVICE

1200a : CONTENT RECORDING
APPARATUS (TYPE A)

301 : COMMUNICATION
NETWORK

140 : OUTSIDE CONTENT
RECORDING APPARATUS

302 : DISPLAY DEVICE

1200b : CONTENT RECORDING
APPARATUS (TYPE B)

140 : OUTSIDE CONTENT
RECORDING APPARATUS

FIG.13

EP 1 768 407 A1

1200 CONTENT RECORDING APPARATUS

NETWORK CONNECTION SECTION — 1205

OUTSIDE I/F SECTION — 1203

BILLING PROCESSING SECTION — 104

CONTENT ACQUISITION SECTION — 101

OUTSIDE CONTENT INPUT/OUTPUT SECTION — 1201

COMMAND CONTROL SECTION — 1214

OUTSIDE DEVICE CONNECTION SECTION — 106

CONTENT PLAYBACK SECTION — 102

ACCESS CONTROL SECTION — 112

DEVICE AUTHENTICATION SECTION — 107

ENCRYPTION/DECRYPTION SECTION — 1213

DEVICE ID RECORDING SECTION — 108

BASE LAYER RECORDING SECTION — 109

ENHANCEMENT LAYER RECORDING SECTION — 110

USAGE CONTROL INFORMATION RECORDING SECTION — 111

140 OUTSIDE CONTENT RECORDING APPARATUS

ACCESS CONTROL SECTION — 141

DEVICE CONNECTION SECTION — 145

ENCRYPTION/DECRYPTION SECTION — 142

DEVICE AUTHENTICATION SECTION — 146

CONTENT RECORDING SECTION — 143

SECURE RECORDING SECTION — 144

DEVICE ID RECORDING SECTION — 147

FIG.14

START

S410 IS THERE CONTENT DOWNLOAD REQUEST? →YES→ S450 CONTENT RECORDING PROCESSING

NO

S420 IS THERE CONTENT PLAYBACK REQUEST? →YES→ S460 CONTENT PLAYBACK PROCESSING

NO

S1310 IS THERE CONTENT TRANSFER REQUEST? →YES→ S1320 CONTENT TRANSFER PROCESSING

NO

S1330 OUTSIDE CONTENT PLAYBACK REQUEST? →YES→ S1340 OUTSIDE CONTENT RECEPTION PLAYBACK PROCESSING

NO

S430 OUTSIDE DEVICE MOUNTED? →YES→ S470 OUTPUT REQUEST? →YES→ S490 BASE LAYER OUTPUT PROCESSING

NO

NO

S480 INPUT REQUEST? →YES→ S491 BASE LAYER INPUT PROCESSING

NO

S440 END?

NO

YES

END

FIG.15

CONTENT TRANSFER
PROCESSING

S1410 — IS THERE RIGHT TO USE? — YES

NO

S1420 — ACQUIRE NEW RIGHT TO USE? — YES

NO

S1450 — BILLING PROCESSING

S1430 — ENHANCEMENT LAYER ENCRYPTION PROCESSING

S1440 — ENHANCEMENT LAYER TRANSFER PROCESSING

END

FIG.16

FIG.17

## INTERNATIONAL SEARCH REPORT

| International application No. |
|---|
| PCT/JP2005/010716 |

**A. CLASSIFICATION OF SUBJECT MATTER**
Int.Cl⁷ H04N7/16, G06F12/14, H04N5/765

According to International Patent Classification (IPC) or to both national classification and IPC

**B. FIELDS SEARCHED**

Minimum documentation searched (classification system followed by classification symbols)
Int.Cl⁷ H04N7/16-7/173, G06F12/14, H04N5/765

Documentation searched other than minimum documentation to the extent that such documents are included in the fields searched
Jitsuyo Shinan Koho       1922-1996   Jitsuyo Shinan Toroku Koho   1996-2005
Kokai Jitsuyo Shinan Koho  1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-231758 A (Toshiba Corp.), 22 August, 2000 (22.08.00), Full text; all drawings (Family: none) | 1-17 |
| A | JP 2003-069551 A (Sony Corp.), 07 March, 2003 (07.03.03), Full text; all drawings (Family: none) | 1-17 |
| A | JP 2003-179580 A (Sony Corp.), 27 June, 2003 (27.06.03), Full text; all drawings & US 2003/126238 A1 | 1-17 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2005 (09.09.05) | 27 September, 2005 (27.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 768 407 A1**

<table>
<tr><td colspan="2" align="center">INTERNATIONAL SEARCH REPORT</td><td>International application No.<br>PCT/JP2005/010716</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-048079 A  (Kabushiki Kaisha Dainawea BB),<br>18 February, 2000 (18.02.00),<br>Par. No. [0025]<br>(Family: none) | 10 |
| A | JP 10-051573 A  (Canon Inc.),<br>20 February, 1998 (20.02.98),<br>Full text; all drawings<br>(Family: none) | 1-17 |
| A | JP 2001-069486 A  (Hitachi, Ltd.),<br>16 March, 2001 (16.03.01),<br>Full text; all drawings<br>(Family: none) | 1-17 |
| A | JP 2001-218204 A  (Canon Inc.),<br>10 August, 2001 (10.08.01),<br>Full text; all drawings<br>& EP 1263229 A1        & WO 2001/58157 A1<br>& US 2003/028397 A1      & CN 1397134 A | 1-17 |
| A | JP 5-083691 A  (Matsushita Electric Industrial Co., Ltd.),<br>02 April, 1993 (02.04.93),<br>Full text; all drawings<br>(Family: none) | 1-17 |
| A | JP 2000-350204 A  (Hitachi, Ltd.),<br>15 December, 2000 (15.12.00),<br>Full text; all drawings<br>(Family: none) | 1-17 |
| A | JP 2002-208922 A  (NTT Docomo Inc.),<br>26 July, 2002 (26.07.02),<br>Full text; all drawings<br>& EP 1223706 A2        & US 2002/118828 A1<br>& CN 1366395 A | 1-17 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001218157 A

- JP 2004175151 A

**Non-patent literature cited in the description**

- MPEG-4 CORE SCALABLE PROFILE. 12 January 2001